# EUROPEAN PATENT SPECIFICATION

(11) **EP 4 216 167 B1**
(45) Date of publication and mention of the grant of the patent: **22.04.2026**
(21) Application number: 22739610.8
(22) Date of filing: 11.01.2022
(51) Int. Cl.: G06T 13/40, G06T 19/20, H04N 21/43, G06F 3/0484, G11B 27/02, G11B 27/34, G06Q 50/10, A63F 13/54, A63F 13/63

(54) **ELECTRONIC DEVICE AND METHOD FOR OPERATING AVATAR VIDEO SERVICE**
ELEKTRONISCHE VORRICHTUNG UND VERFAHREN ZUM BETRIEB EINES AVATAR-VIDEODIENSTES
DISPOSITIF ÉLECTRONIQUE ET PROCÉDÉ DE FONCTIONNEMENT D'UN SERVICE VIDÉO D'AVATAR

(30) Priority: 13.01.2021 KR 20210004702
(43) Date of publication of application: 26.07.2023
(73) Proprietor: Samsung Electronics Co., Ltd., Suwon-si, Gyeonggi-do 16677 (KR)
(72) Inventor: LEE, Minkyung, Suwon-si, Gyeonggi-do 16677 (KR); SHIN, Dongsoo, Suwon-si, Gyeonggi-do 16677 (KR); LEE, Yunjae, Suwon-si, Gyeonggi-do 16677 (KR); JANG, Jinsoo, Suwon-si, Gyeonggi-do 16677 (KR); PARK, Miji, Suwon-si, Gyeonggi-do 16677 (KR); BAE, Donghwan, Suwon-si, Gyeonggi-do 16677 (KR); YOO, Sanga, Suwon-si, Gyeonggi-do 16677 (KR); LEE, Kyuho, Suwon-si, Gyeonggi-do 16677 (KR); LEE, Hyeonju, Suwon-si, Gyeonggi-do 16677 (KR); CHOE, Jina, Suwon-si, Gyeonggi-do 16677 (KR)
(74) Representative: Gulde & Partner
(86) International application number: PCT/KR2022/000408
(87) International publication number: WO 2022/154415

(56) References cited:
- WO-A1-2010/143359
- KR-A- 20060 058 878
- KR-A- 20060 089 021
- KR-A- 20090 127 630
- KR-A- 20150 116 929
- KR-A- 20190 139 962
- US-A1- 2005 280 660
- US-A1- 2017 357 417
- US-A1- 2019 114 038
- US-A1- 2020 226 848

## Description

### Technical Field

Various embodiments relate to an electronic device and an avatar video service operating method.

### Background Art

An electronic device may generate an avatar which is supposed to represent a user by using a user image acquired from a camera. The avatar may include a 3D avatar. The electronic device may apply a facial expression, animation motion, or text to the avatar, thereby expressing the same. An avatar service (or emoji service) function that can be variously utilized inside the electronic device may be provided.

US 2017/357417 Al discloses methods and systems for creating and using customized avatar instances to reflect current user states. The user states can be defined using trigger events based on user-entered textual data, emoticons, or states of the device being used. For each user state, a customized avatar instance having a facial expression, body language, accessories, clothing items, and/or a presentation scheme reflective of the user state can be generated. When one or more trigger events indicating occurrence of a particular user state are detected on the device, the avatar presented on the device is updated with the customized avatar instance associated with the particular user state.

US 2005/280660 Al discloses a mobile terminal that can display a screen image during a specific state, which includes a character memory for storing character images and a screen image created by a combination of the character images and which is displayable during the specific state of the mobile terminal. The mobile terminal further includes a controller for controlling the display of the screen image, and a display unit for displaying the screen image. When an event occurs in the mobile terminal, the controller further processes the event and changes the display data of the screen image according to the event processing result, and displays the changed screen image during the specific state of the mobile terminal.

WO 2010/143359 Al discloses an avatar display system which displays avatar images corresponding to a plurality of users who are present around a plurality of display devices arranged at physically distant positions, on the plurality of display devices, wherein the system comprises a position information calculation means for calculating position information of each user, a position relationship calculation means for calculating position relationship information which indicates position relationships between the plurality of users and the plurality of display devices on the basis of the position information calculated by the position information calculation means, and a user selection means for selecting a user whose avatar image is to be dis played on the plurality of display devices among the plurality of users on the basis of the position relationship information calculated by the position relationship calculation means.

### Disclosure of Invention

### Technical Problem

Various embodiments may provide an environment in which an avatar video (or avatar video package) can be fabricated and provided by recommending a sound source and a background with regard to an avatar motion in an avatar service, and may provide a method and an apparatus capable of variously utilizing the avatar video in an electronic device.

### Solution to Problem

The present invention is defined by the appended set of claims. Preferred embodiments are defined by the dependent claims.

### Advantageous Effects of Invention

According to various embodiments, an avatar video obtained by combining multiple elements (for example, avatar motion, background, and music) may be provided in an avatar service, and the avatar video may be provided as a phone decoration element, thereby providing the user with an avatar service for more improved experiences.

According to various embodiments, elements of an avatar video may be changed and applied so as to reflect app setting, screen configuration, or context, thereby providing the user with a customized avatar service.

### Brief Description of Drawings

Fig. 1 is a block diagram illustrating an electronic device 101 in a network environment 100 according to various embodiments.
FIG. 2 illustrates a method for operating an avatar video service of an electronic device according to various embodiments.
FIG. 3 illustrates user interface screens related to an avatar video service of an electronic device according to an embodiment.
FIG. 4 is a flowchart illustrating an avatar video configuration operation in an electronic device according to an embodiment.
FIG. 5 is an exemplary diagram illustrating providing of an avatar video list of an electronic device according to an embodiment.
FIG. 6 is a flowchart illustrating an avatar video generation and editing operation of an electronic device according to an embodiment.
FIG. 7 illustrates an avatar video editing user interface environment of an electronic device according to an embodiment.
FIG. 8 illustrates an avatar video editing user interface environment of an electronic device according to an embodiment.
FIG. 9 illustrates an avatar video editing user interface environment of an electronic device according to an embodiment.
FIG. 10 illustrates an avatar video editing user interface environment of an electronic device according to an embodiment.
FIG. 11 is a context diagram illustrating an avatar service operation of an electronic device according to various embodiments.
FIG. 12 is a flowchart illustrating an operation of customizing an avatar video according to a user context of an electronic device according to various embodiments.
FIG. 13 illustrates an avatar video user interface environment of an electronic device according to various embodiments.
FIG. 14 illustrates an avatar video user interface environment of an electronic device according to various embodiments.
FIG. 15 illustrates an avatar video user interface environment of an electronic device according to various embodiments.
FIG. 16 illustrates an avatar video user interface environment of an electronic device according to various embodiments.
FIG. 17 illustrates an avatar video user interface environment of an electronic device according to various embodiments.
FIG. 18 illustrates an avatar video user interface environment of an electronic device according to various embodiments.
FIG. 19 illustrates an avatar video user interface environment of an electronic device according to various embodiments.

### Mode for the Invention

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

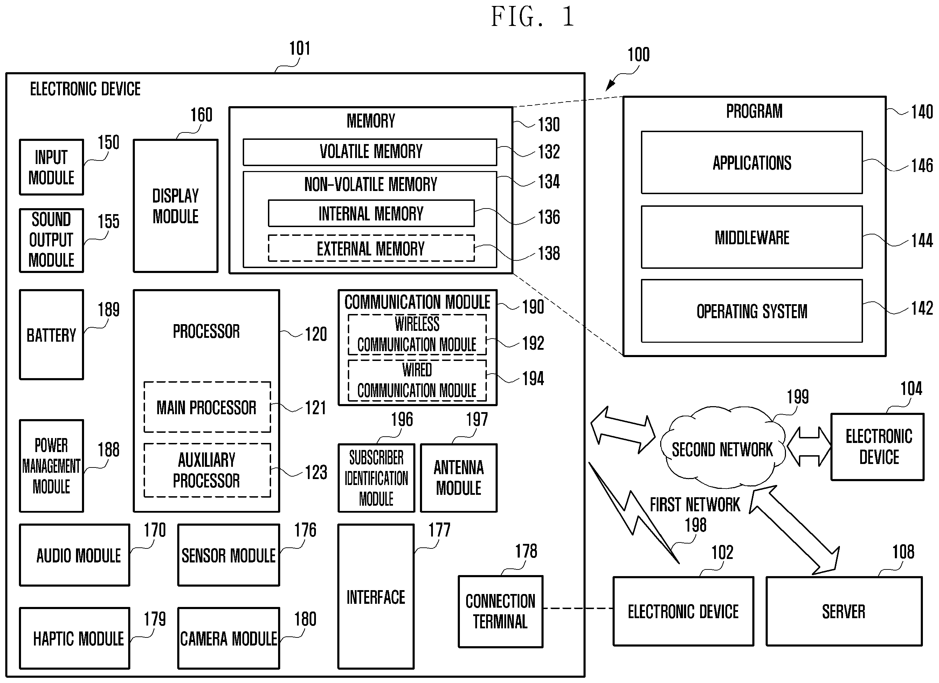

Fig. 1 is a block diagram illustrating an electronic device in a network environment according to an embodiment of the disclosure.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, the memory 130 may store data related to an avatar video service. The memory 130 may store various instructions that may be executed by the processor 120.

According to an embodiment, the processor 120 may provide a user interface environment for supporting the performance of a function related to an avatar video (or an avatar video package or avatar video content) including a plurality of elements such as a motion, a background source, and a sound source in the avatar service through the display device 160 (e.g., a touch screen display including a touch circuit). The processor 120 may provide, to a user through the user interface environment, a function of recognizing an object (e.g., a user) from an image, a function of generating an avatar replacing a user, a function of generating an avatar video by recommending a suitable background source and music for each avatar motion, and a function of configuring a screen related to an avatar video.

In an embodiment, the processor 120 may generate (or produce) an avatar video based on an avatar video template that configures a motion, a background source, and a sound source in the form of one package. For example, the electronic device 101 may download a template that supports recommending and providing a background source and a sound source for each motion (e.g., a background source and a sound source are recommended by the electronic device according to a motion), and may analyze music and a background source database (e.g., a memory or server) to recommend a sound source and a background source matching each motion, and may generate and store an avatar video including the recommended sound source and background source together with the motion. In another embodiment, the electronic device 101 may download a pre-produced avatar video (or an avatar video package) through a server and provide the same to a user through a user interface environment.

Hereinafter, an avatar video service function supported by the electronic device 101 will be described in detail, and operations of the processor 120 to be described later may be performed by loading instructions stored in the memory 130.

The electronic device 101 according to various embodiments may include a display, a processor 120, and a memory 130, wherein the memory 130 includes instructions causing the processor 120 to, when an avatar service is executed, provide a screen setting category in an avatar video mode, provide an avatar video list obtained by combining at least one of a sound source, a background source, and an avatar arrangement structure, which are recommended for each avatar motion, in response to selection of a first screen setting category in the screen setting category, and configure a screen of the selected first screen setting category such that a first avatar video is reproduced, in response to selection of the first avatar video from the avatar video list.

The memory 130 according to various embodiments may further include instructions causing the processor 120 to configure an avatar video by combining a sound source and a background source for each motion based on an avatar video template configured to include a motion, a sound source, and a background source, and provide the avatar video list in the form of a thumbnail.

The memory 130 according to various embodiments may further include instructions causing the processor 120 to recommend a sound source suitable for each motion by comparing each piece of motion information stored in the memory 130 with a sound source database stored in the memory, recommend a background source image suitable for motion information stored in the memory from an image database stored in the memory, and provide an avatar video obtained by combining the recommended sound source and background source image to the avatar video list.

The memory 130 according to various embodiments may further include instructions causing the processor 120 to provide an avatar video package, to which music and a background source recommended for each motion are automatically applied, to the avatar video list from a server.

The screen setting category according to various embodiments may include at least one of a call screen setting item, a lock screen setting item, a reminder notification screen setting item, a background source screen setting item, an alarm screen setting item, and a sharing setting item, and the memory 130 may further include instructions causing the processor 120 to enter an individual setting mode selected in response to a user input for entering an individual setting mode for each screen setting category, and configure each screen for each selected avatar video.

The memory 130 according to various embodiments may further include instructions causing the processor 120 to recommend one sound source through at least one of selection of a sound source matching beats per minute (bpm) information of each motion, selection of a sound source corresponding to a music genre theme of each motion, or selection of a sound source matching identification information of each motion, and select and recommend a sound source having a higher priority based on at least one of sound source preference, metadata comparison order, and the number of times of reproductions when multiple sound sources are recommended.

The memory 130 according to various embodiments may further include instructions causing the processor 120 to identify the size of the display, identify a spatial region in which an avatar is to be displayed according to the display size, and change and display the size and position of an avatar to be displayed when the avatar video is reproduced based on the spatial region.

The memory 130 according to various embodiments may further include instructions causing the processor 120 to provide an avatar editing function in the first avatar video reproduce mode, and perform at least one of adjustment of the size and position of an avatar through the avatar editing function according to a user request, changing of a sound source recommended in the first avatar video, or editing and changing of a background source recommended in the first avatar video.

The memory 130 according to various embodiments may further include instructions causing the processor 120 to, when an avatar video is configured in association with a lock screen or a background source screen, activate a mute function.

The memory 130 according to various embodiments may further include instructions causing the processor 120 to, when a screen on which an avatar video is configured is displayed, display user interface objects arranged on the screen by adjusting the size and position of an avatar included in the avatar video or adjusting the size and position of a background source according to positions thereof.

The memory 130 according to various embodiments further includes instructions causing the processor 120 to, when a screen on which an avatar video is configured is displayed, display the screen by analyzing a usage context of the electronic device, performing a mute activation function, adjusting the size and position of the avatar included in the avatar video, or adjusting the size and position of the background source according to the context situation.

The memory 130 according to various embodiments may further include instructions causing the processor 120 to, when a screen on which an avatar video is configured is displayed, change an avatar costume, a background source, and accessories included in an avatar video, which is configured according to time information, position information, and schedule information, to other optimized items and display the same.

The memory 130 according to various embodiments may further include instructions causing the processor 120 to provide a new avatar video generation item in the avatar video mode and provide the avatar video list based on selection of the new avatar video generation item, and in response to storing a second avatar video selected from the avatar video list, provide sharing items and setting category items for configuring the second avatar video.

The memory 130 according to various embodiments may further include instructions causing the processor 120 to provide a new avatar video generation item in the avatar video mode and provide a motion list based on selection of the new avatar video generation item, in response to selection of a first motion from the motion list, reproduce a second avatar video obtained by combining a background source and music, which are recommended in response to the first motion, and in response to storing the second avatar video, provide sharing items and setting category items for configuring the second avatar video.

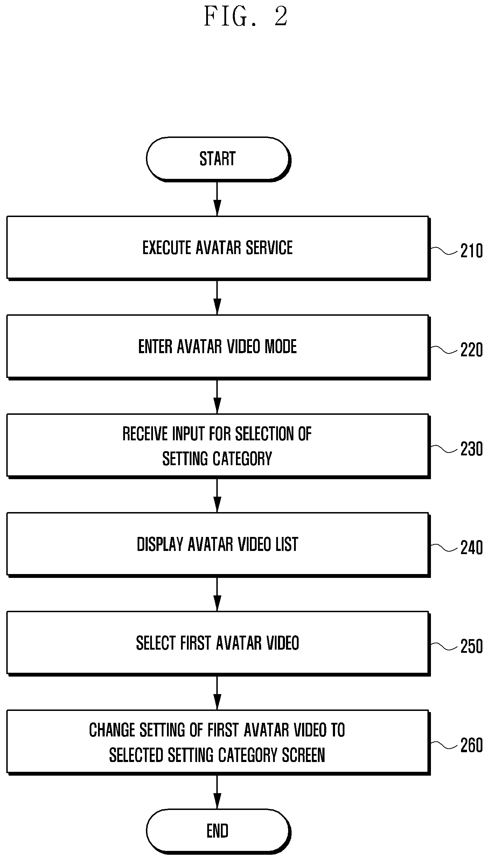

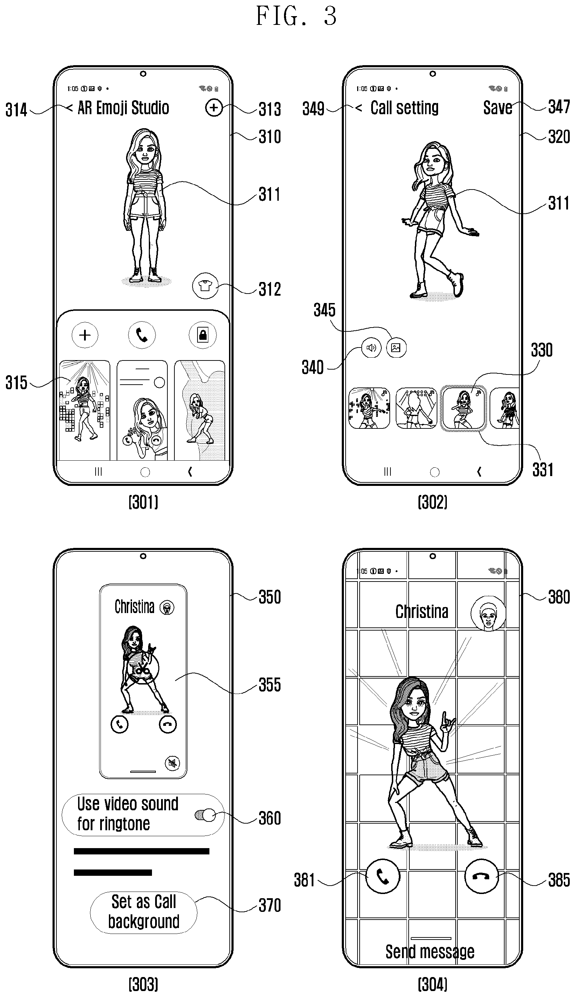

FIG. 2 illustrates a method for operating an avatar video service of an electronic device according to various embodiments, and FIG. 3 illustrates user interface screens related to an avatar video service of an electronic device according to an embodiment.

Referring to FIGS. 2 and 3, a processor (e.g., the processor 120 of FIG. 1) of the electronic device 101 according to an embodiment may perform an avatar service installed in the electronic device 101 in operation 210.

For example, when a user touches an avatar application (e.g., an avatar animation app or an augmented reality app), an execution process of the avatar-related application may be started. The avatar application may be understood as an application supporting functions related to an avatar character, an emoji/animated sticker, and an avatar video. Functions supported by the avatar application may be provided as one of the camera functions (e.g., an app in app).

In operation 220, the processor 120 may enter an avatar video mode in response to a user input requesting to enter an avatar video mode.

In response to entering the avatar video mode, the processor 120 may output, to the display, an avatar video user interface (UI) environment for supporting the performance of functions related to an avatar video. The avatar video mode may support an avatar video display function, an editing function, an avatar video setting function, an avatar video generation function, and a sharing function.

As an example, as shown in <301>, the processor 120 may display a first screen 310 including a setting category list 315 in an avatar show room environment in which an avatar 311 is displayed. The first screen 310 may include an avatar 311 selected by a user, an item 312 for changing the styling (e.g., clothes and hair) of the avatar, and an additional avatar generation item 313, and a cancellation item 314 for returning to a previous screen (or function).

The setting category list 315 may include setting categories that can be entered in the avatar video mode. Settings categories include call screen settings, alarm screen settings, background source screen settings, lock screen settings, sharing settings, or music reproduction screen settings for example, but are not limited thereto, and may include other setting categories related to sound settings or screen settings within the electronic device.

According to another embodiment, the setting category list 315 may include a category supporting generation of a new avatar video.

In operation 230, the processor 120 may receive a user input (e.g., a touch or tap input) for selection of a setting category to which the avatar video is to be applied in the electronic device 101.

In operation 240, the processor 120 may display a list of avatar videos in which music and a background source recommended for each motion are combined in response to the selection of the setting category.

According to an embodiment, the processor 120 may configure (or generate) an avatar video, to which a sound source (e.g., music) and a background source (e.g., an image or video) recommended for each motion are automatically applied, in a package form. For example, the processor 120 may download, from a server, an avatar video template configured to include a motion, a sound source, and a background source. The processor 120 may compare and analyze motion animation information (e.g., a bhv file set) stored in the electronic device 101 and a database stored in the electronic device, so as to select a sound source (e.g., music) and a background source (e.g., an image or video) recommended for each motion. The processor 120 may recommend and provide (or call) a first music and a first background source suitable for a first motion based on the avatar video template, and may recommend and provide (or call) a second music and a second background source suitable for a second motion, to display the avatar video list.

Accordingly, the electronic device 101 may provide, to a user, avatar videos (e.g., personalized avatar videos) which have the same motion information but are different for each electronic device 101 due to the automatic recommendation function of the background source and the sound source.

Additionally, the processor 120 may analyze a space (e.g., an avatar size, a spatial position) suitable for the display size of the electronic device in addition to the sound source and the background source, recommend the avatar arrangement position, and apply the recommended avatar arrangement position to the avatar video.

According to an embodiment, the processor 120 may receive (or download), from a server (e.g., an avatar service support server), an avatar video template to which a sound source and a background source recommended in response to each motion are applied, and may provide the received avatar video to a display list.

As an example, as shown in <302> of FIG. 3, the processor 120 may display a second screen 320 supporting call setting in response to selection of a call setting category. The second screen 320 may include an avatar 311, an avatar video list 330, a mute setting item 340 supporting a sound source reproduction or sound source reproduction cancellation function, and a background source setting item 345 for changing a background source displayed in the avatar showroom, a save item (e.g., save) 347, and a cancel menu. The save item (e.g., save) may support to save the avatar video being reproduced in the avatar showroom or to enter the setting mode of the setting category.

According to an embodiment, the processor 120 may provide the avatar video list 330 in the form of a thumbnail. The avatar video list 330 may include at least one of thumbnails of avatar videos generated by the electronic device 101 and thumbnails of avatar videos downloaded from a server. In some embodiments, the avatar video list 330 may include avatar video (template) thumbnails that can be downloaded from the server.

According to an embodiment, the processor 120 may, in response to receiving a drag input for moving the avatar video list 330 in a first direction (e.g., →) or in a second direction (e.g., ←), move the avatar video list 330 to display avatar videos in different locations.

In operation 250, the processor 120 may receive a user input for selecting a first avatar video from the avatar video list.

According to an embodiment, the processor 120 may display (or reproduce) an avatar, which is displayed in an avatar showroom space, based on a selected first avatar video. For example, the processor 120 may operate the avatar with a first motion included in the first avatar video, output a first music, and display a first background source as the background source of the avatar showroom. Additionally, the processor 120 may display the avatar by adjusting the size and position of the avatar based on an avatar arrangement structure recommended in association with the first avatar video.

As an example, as shown in <302> of FIG. 3, in response to the selection of the first avatar video 331 from the avatar video list 330, the avatar 311 of the avatar showroom area may be reproduced with the first motion included in the first avatar video, a recommended first background source image may be displayed, and the recommended first music may be output and displayed.

According to an embodiment, in response to a user input for selection of the first avatar video 331, the processor 120 may provide a visual effect indicating that the first avatar video 331 has been selected, for example, the first avatar video 331 may be highlighted in the form of a box or check indication (v) may be provided to the first avatar video 331.

According to an embodiment, when the processor 120 selects another second avatar video from the avatar video list 330 of reference numeral <302>, the electronic device 101 may initialize the display of the first avatar video relating to the previous selection, and may display (or reproduce) the avatar with another selected second avatar video.

In operation 260, the processor 120 may configure (change) the selected first avatar video to a screen of the selected setting category. For example, the processor 120 may enter a setting mode of a selected setting category in response to reception of a saved input, and configure the first avatar video selected in the setting mode as a screen of the setting category.

As an example, the processor 120 enters a call setting mode in response to selection of the save item 347, and as shown in <303> of FIG. 3, the processor may perform switch to a call setting screen 350 for setting a call screen with the first avatar video. The call setting screen 350 may include a call screen 355 to which the first avatar video selected in the avatar video mode is applied, a music reproduction on/off item 360, and a setting approval item 370.

The processor 120 may be configured to, in response to the input for selection of the setting approval item 370, display the call screen 355 to which the first avatar video is applied at the time of call reception or transmission.

When receiving a call from the counterpart device, the processor 120 may display, on the display, a call screen 380 to which the first avatar video is applied, as shown in <304> of FIG. 3. The call screen 380 may display a reception approval item 381 and a reception rejection item 385. When a call is received, an avatar video may be reproduced on the call screen 380. For example, the processor 120 may display an avatar on the first background source based on the first avatar video configured as the call screen, and may output a first sound source while moving the displayed avatar in the first motion.

As another example, the processor 120 may configure the avatar video in a lock screen category. In a case of the lock screen category, even if an avatar video, that is, an avatar video including all of the motion, sound source, and background source, is configured, a mute option may be configured as a default for reproduction of the sound source.

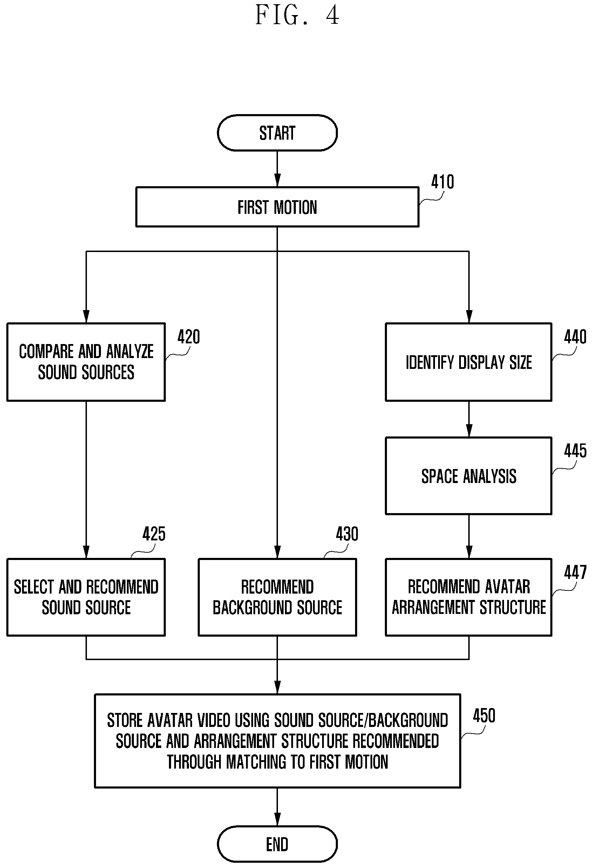

FIG. 4 is a flowchart illustrating an avatar video configuration operation in an electronic device according to an embodiment.

Referring to FIG. 4, according to an embodiment, the electronic device 101 may recommend a sound source, a background source, and an avatar arrangement structure matching for each motion, may configure (or generates) an avatar video including the recommended sound source, background source, and avatar arrangement structure, and provide the same to an avatar video list.

As an example, the electronic device 101 may perform the operations of FIG. 4 for each motion in order to configure an avatar video. In operation 410, the processor 120 of the electronic device 101 may select one first motion from a motion database, and may identify motion information (e.g., metadata) related to the first motion. The motion information may include at least one of a three-dimensional model to be applied to the face, the facial texture (e.g., information used to express the color or texture of the three-dimensional model), facial expression information, body motion information, body texture information, and bpm information according to the movement speed.

In operation 420, the processor 120 may compare and analyze the motion information and a sound source database stored in the electronic device 101 or a sound source database provided from a server. For example, the processor 120 may compare and analyze metadata of the selected first motion with metadata of a sound source (e.g., an mp3 file or a sound file).

In operation 425, as a result of the comparison and analysis, the processor 120 may select and recommend a sound source suitable for the selected first motion.

As an example, the processor 120 may identify beats per minute (BPM) information in motion data of the first motion, may select a sound source matching the identified BPM information, and may recommend the selected sound source.

As another example, the processor 120 may identify a music genre theme of the first motion, may select a sound source included in the identified music genre theme (e.g., jazz or hiphop) or match identification information (e.g., motion name) of the selected motion to the title, album information, and artist name of the sound source so as to recommend a sound source.

According to an embodiment, when there is a plurality of sound sources selected for the first motion, the processor 120 may recommend a sound source having a higher priority such as user preference, the number of pieces of metadata similar information, and the number of times of reproductions.

Independently or in parallel, in operation 430, the processor 120 may identify metadata of an image or video information stored in the electronic device 101 to recommend a background source (or a background source image), which matches to a first motion or a first music recommended for the first motion.

For example, if the music suitable for the first motion is a summer genre, the processor 120 may recommend a background source corresponding to the summer image. When the degree of movement of the first motion corresponds to a slow motion, the processor 120 may recommend a background source corresponding to the autumn image.

Independently or in parallel, in operation 440, the processor 120 may identify the display size (e.g., the size of the display area). In operation 445, the processor 120 may analyze a space for displaying the avatar according to the display size. In operation 447, the processor 120 may recommend an avatar arrangement structure (e.g., an avatar size and position) according to a space.

According to some embodiments, operations 440 to 447 may be omitted.

In operation 450, the processor 120 may configure (or generate) an avatar video based on a sound source, a background source, and an arrangement structure, which are recommended in response to the first motion.

According to an embodiment, the processor 120 may store the avatar video in the form of a package. For example, the processor 120 may associate and store a first music file, a first background source image, and an avatar arrangement structure, which are recommended in response to the first motion, and may call the first music file and the first background source image, which are stored in association with the first motion, at the time of providing the avatar video, and may dispose the avatar according to the arrangement structure data.

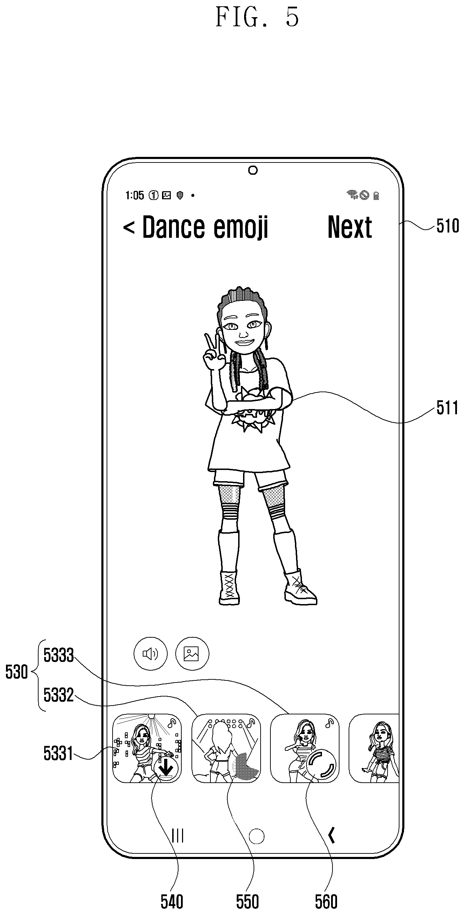

FIG. 5 is an exemplary diagram illustrating providing of an avatar video list of an electronic device according to an embodiment.

Referring to FIG. 5, according to an embodiment, the processor 120 of the electronic device 101 may display an avatar video list 530 (e.g., a first avatar video 5331, a second avatar video 5332, and a third avatar video 5333 are included) in an avatar video mode. The avatar video list may include multiple avatar video thumbnails.

As an example, the avatar video list may be provided in the order of avatar videos recently generated first.

The processor 120 may display an identifier for distinguishing between a pre-produced avatar video or a downloaded avatar video and an avatar video other than the pre-produced or downloaded avatar video.

As an example, when an avatar video (or an avatar video template corresponding thereto) selected by a user from the avatar video list is required to be downloaded, the processor 120 may display an identifier 540 having a downward pointing arrow shape that may be understood meaning that the corresponding avatar video is downloadable.

As another example, the processor 120 may download an avatar video (or an avatar video template corresponding thereto) from a server according to a user request, and may display an identifier 550 indicating that the corresponding avatar video is being downloaded. The processor 120 may display an identifier 560 indicating that the download of the corresponding avatar video has been completed and that the avatar video (or the avatar video template corresponding thereto) is being applied (or prepared for execution) to the electronic device.

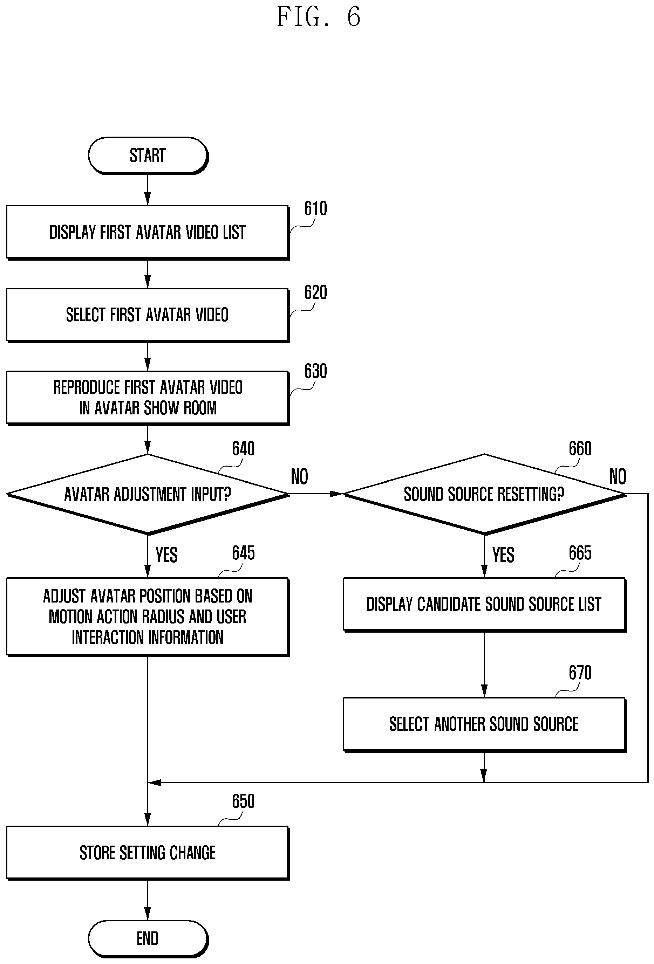

FIG. 6 is a flowchart illustrating an avatar video generation and editing operation of an electronic device according to an embodiment.

Referring to FIG. 6, according to an embodiment, the processor 120 of the electronic device 101 may display an avatar video list in an avatar video mode in operation 610. For example, the processor 120 may display an avatar video list including music and background sources recommended for each motion in the form of thumbnails.

Additionally, the processor 120 may analyze a space (e.g., an avatar size or a spatial position) suitable for the display size of the electronic device in addition to the sound source and the background source, recommend the avatar arrangement position, and apply the recommended avatar arrangement position to an avatar video.

According to an embodiment, the processor 120 may receive (or download) an avatar video template, to which a sound source and a background source recommended in response to each motion are applied, from a server (e.g., an avatar service support server), and may provide the received avatar video to the avatar video list.

In operation 620, the processor 120 may receive a user input for selecting a first avatar video. In operation 630, the processor 120 may reproduce (or display) the selected first avatar video in an avatar showroom. For example, the processor 120 may move an avatar in a first motion corresponding to the first avatar video, may display a recommended background source in the first motion, and may output music.

In operation 640, the processor 120 may determine whether an avatar adjustment input is received from the displayed first avatar video. For example, a user may adjust the position of the avatar by touching the avatar, or may adjust the size of the avatar by pinching in (or pinching out) the avatar.

In operation 645, in response to reception of the avatar adjustment input, the processor 120 may adjust the position of the avatar based on the motion action radius and user interaction information (e.g., touch movement or movement direction). The processor 120 may proceed to operation 650 and change and store the first avatar video setting to the adjusted position and size values of the avatar.

In operation 660, the processor 120 may identify whether a sound source resetting input, not the avatar adjustment input, is received. For example, the processor 120 may receive a user input for entering the sound source resetting mode. In operation 665, the processor 120 may enter a sound source setting mode and display a list of candidate sound sources related to the first avatar video. The processor 120 may provide, on the screen, a list of candidate sound sources to be matched based on bpm information, genre theme information, and identification information of the first motion included in the first avatar video. In operation 670, the processor 120 may receive a user input for selecting another sound source. In operation 650, the first avatar video setting may be changed and stored as the selected different sound source.

When the avatar adjustment input or the sound source resetting input is not received, the processor 120 may store the first avatar video being reproduced in the avatar showroom.

Although not shown in the drawing, the processor 120 may receive a user input requesting background source setting, and may change the background source setting related to the first avatar video displayed in the avatar showroom.

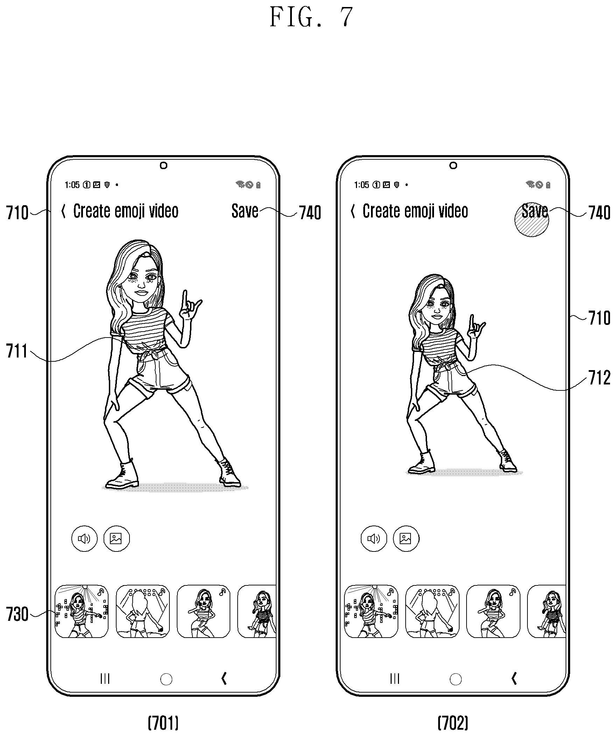

FIG. 7 illustrates an avatar video editing user interface environment of an electronic device according to an embodiment.

Referring to FIG. 7, the electronic device 101 according to an embodiment may support an avatar editing (adjustment) function in an avatar video mode.

In response to selection of a first avatar video, the processor 120 may display a first screen 710 for displaying (reproducing) an avatar in an avatar showroom space based on a first avatar video. For example, as shown in <701>, the processor 120 may move an avatar 711 with a first motion corresponding to the first avatar video selected from an avatar video list 730, may display a background source recommended with the first motion, and may output music.

The processor 120 may receive a user gesture for adjusting the size of the avatar 711 (e.g., a gesture of pinching in after selection of the avatar), and may display, in response to the user gesture, as shown in <702>, an avatar 712 adjusted to a size corresponding to the user gesture.

In response to selection of a save item 740, the processor 120 may change and store the configuration of the size and position values of the avatar corresponding to the first avatar video.

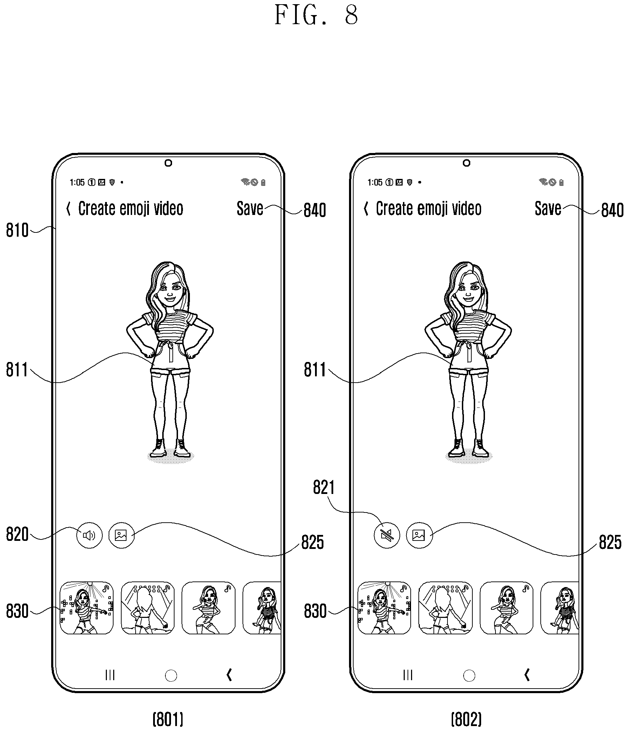

FIG. 8 illustrates an avatar video editing user interface environment of an electronic device according to an embodiment.

Referring to FIG. 8, the electronic device 101 according to an embodiment may support a mute function for music recommended in an avatar video mode. In response to selection of a first avatar video, the processor 120 may display, as shown in <801>, a first screen 810 for displaying (reproducing) an avatar 811 in an avatar showroom space based on the first avatar video. The first screen 810 may include an avatar video list 830, a mute item 820, a background source editing item 825, and a save item 840.

The processor 120 may display the mute item 820 in a visually distinguishable manner, as the activation of sound source reproduction (or mute deactivation) and stopping of sound source reproduction (or muting). For example, when sound source reproduction is activated, the mute item may be expressed as an object of reference numeral <801>.

In response to selection of the mute item 820, the processor 120 may express the mute item 820 as an object shown in reference numeral <802>. The processor 120 may resume reproduction of the sound source in response to a user input for selecting the mute item 820 again in reference numeral <802> and may express the mute item as an object of <801>.

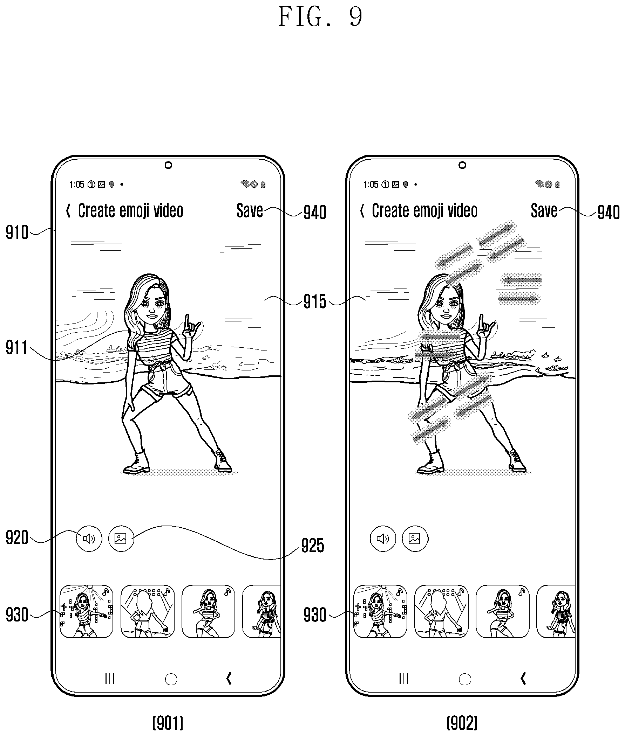

FIG. 9 illustrates an avatar video editing user interface environment of an electronic device according to an embodiment.

Referring to FIG. 9, the electronic device 101 according to an embodiment may support a function of editing a background source image recommended in an avatar video mode. In response to selection of a first avatar video, the processor 120 may display (reproduce), as shown in <901>, an avatar 911 in an avatar showroom space based on a first avatar video. A first screen 910 may include an avatar video list 930, a mute item 920, a background source editing item 925, and a save item 940.

The processor 120 may display a background source image 915 recommended based on the first avatar video on a first screen 910.

The processor 120 may enter a background source editing mode as illustrated in <901> in response to selection of a background source editing item 925. In the background source editing mode, the processor 120 may allow a user input for the background source image. The background source editing mode may support a background source image reduction/enlargement function and a background source image movement function, and additionally may support an avatar size reduction/enlargement function and an avatar movement function.

For example, a user may enlarge or reduce the size of the background source image. The user may move the position of the background source image by dragging the background source image to one direction thereof.

The processor 120 may change and store a background source editing setting corresponding to the first avatar video in response to selection of a save item 940.

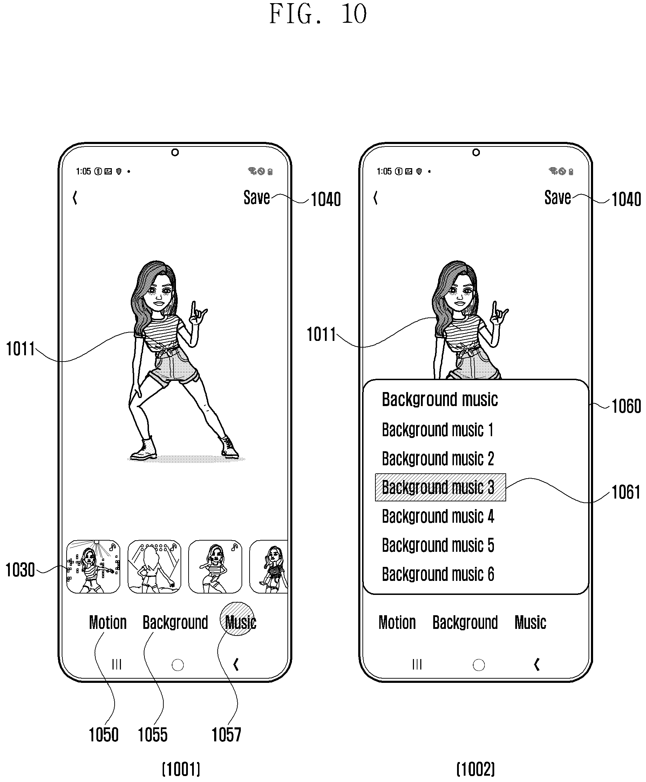

FIG. 10 illustrates an avatar video editing user interface environment of an electronic device according to an embodiment. Unlike FIGS. 7 to 9, the screen of FIG. 10 includes a motion editing item 1050, a background source editing item 1055, and a sound source editing item 1057 while excluding a mute item and a background source editing item, but the user interface environment is merely an example, and the motion editing item 1050, the background source editing item 1055, and the sound source editing item 1057 may be applied to another user interface environment as well.

Referring to FIG. 10, the electronic device 101 according to an embodiment may support a function of editing (or changing) a sound source recommended in the avatar video mode. In response to selection of the first avatar video, the processor 120 may display, as shown in <1001>, a first screen 1010 for displaying (reproducing) an avatar 1011 in the avatar showroom space based on a first avatar video. The first screen 1010 may include an avatar video list 1030, a motion editing item 1050, a background source editing item 1055, a sound source editing item 1057, and a save item 940.

The processor 120 may provide a candidate sound source list 1060 related to the first avatar video on the first screen 1010, as shown in <1002>, in response to a user input for selecting the sound source editing item 1057.

The processor 120 may reproduce the selected sound source based on an input for selecting another sound source 1061 from the candidate sound source list 1060. The processor 120 may express the items of the selected sound source and the unselected sound source to be visually distinguished (e.g., circle shape display or highlight display).

In response to selection of the save item 940, the processor 120 may perform change to another sound source selected from the candidate sound source list 1060 and store the same.

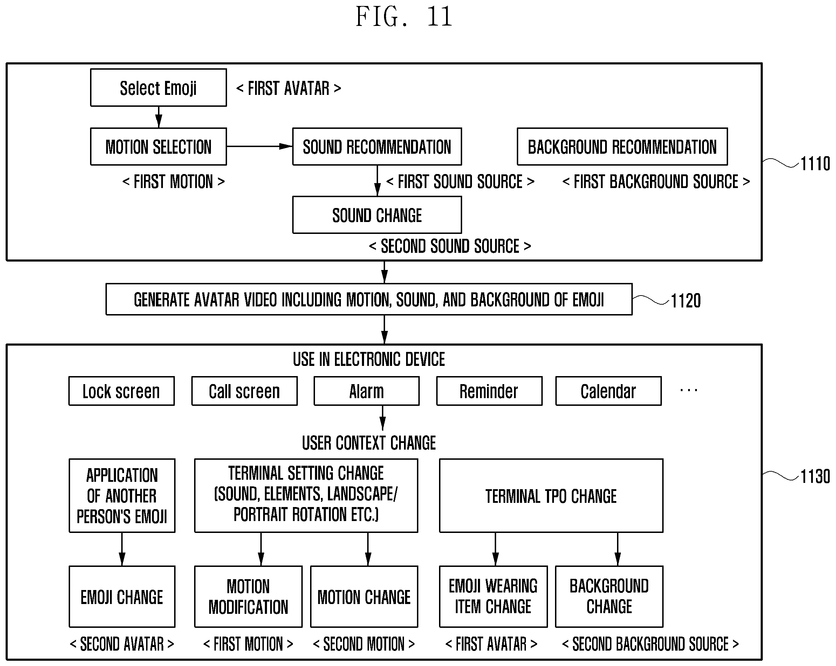

FIG. 11 is a context diagram illustrating an avatar service operation of an electronic device according to various embodiments.

Referring to FIG. 11, according to an embodiment, the electronic device 101 may perform a first operation of recommending a sound source and a background source for each motion in order to configure an avatar video, a second operation of generating (or configuring) an avatar video including a motion, a sound source, and a background source for the avatar (e.g., emoji), and a third operation of using the avatar video in various apps (or settings) as a phone decoration element of the electronic device and optimizing and providing elements (e.g., a background source, a sound source, an avatar arrangement, or avatar information) included in the avatar video according to situation and according to context analysis.

When describing the first operation, when an emoji (e.g., a first avatar) is selected to configure an avatar video and a motion (e.g., a first motion) is selected for the selected emoji, the electronic device 101 may analyze a sound source and background source database to recommend a sound suitable for the selected motion (e.g., a first sound source) and recommend a background source (e.g., a second background source) suitable for the selected motion. Although omitted from the drawings, the electronic device 101 may additionally recommend an avatar arrangement structure in response to the selected motion.

Optionally, when the user requests a sound change, the electronic device 101 may perform sound change (e.g., a second sound source). The electronic device 101 may apply the changed sound to the selected motion. Additionally, the electronic device 101 may support a function of changing the background source recommended for the selected motion, editing the background source, or editing the avatar.

The electronic device 101 may perform a first operation for each motion data stored in the electronic device.

When describing the second operation, the electronic device 101 may generate an avatar video including the sound source and the background source, which are recommended in the first operation, and the selected motion. The electronic device 101 may configure an avatar video based on an avatar video template configured to include a motion, a sound source, and a background source, and store the same.

When describing the third operation, the electronic device 101 may provide the avatar video to be used as various phone decoration elements of the electronic device. The electronic device 101 may access a setting mode of another app in the avatar video mode. The electronic device 101 may configure the avatar video as another app screen of the electronic device, for example, a lock screen, a call screen, an alarm screen, a reminder screen, and a calendar screen. The electronic device 101 may provide an option to select whether to use the avatar video on the description screen of each app.

The electronic device 101 may analyze the context according to the situation of the electronic device 101 and optimize and change the avatar video for the electronic device.

As an example, when an emoji (or avatar) corresponding to identification information of a counterpart device is present when receiving a call, the electronic device 101 may maintain other elements in the avatar video, for example, the background source and sound source, and may change the avatar to another person's avatar (e.g., a second avatar).

As another example, when the screen and sound-related settings (e.g., a landscape mode, a portrait mode, or sound change) of the electronic device 101 are changed, the electronic device 101 may modify the selected motion or change the selected motion to another motion.

As another example, when the current time, a place in which the electronic device is located, and an occasion are changed, the electronic device 101 may recommend an avatar's accessories (e.g., wearing items) suitable for the time, the place, and the occasion, may perform change to the recommended accessory, or may perform change to a background image suitable for the time, the place, and the occasion.

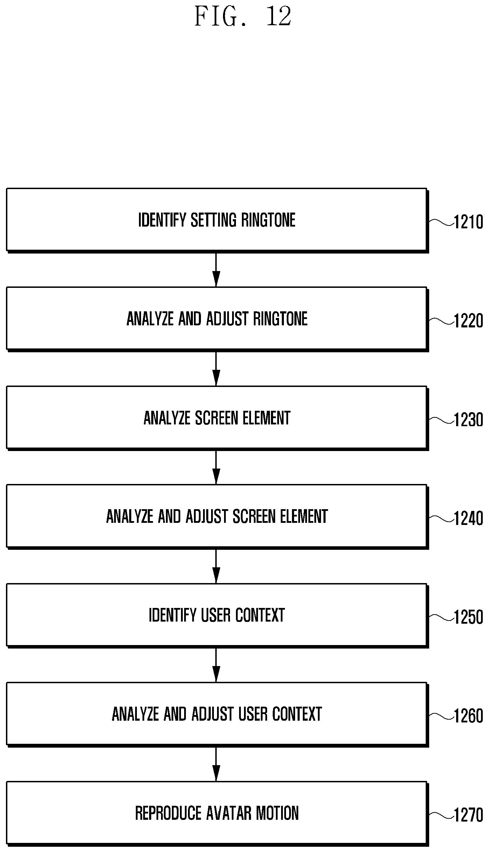

FIG. 12 is a flowchart illustrating an operation of customizing an avatar video according to a user context of an electronic device according to various embodiments.

Referring to FIG. 12, according to an embodiment, the electronic device 101 may analyze app setting information, elements of a UI screen, and a context of the electronic device to automatically adjust elements of an avatar video to provide a user-customized avatar video.

For example, in operation 1210, the processor 120 may identify a ringtone (e.g., a sound source) of a sound setting configured in the electronic device. For example, the ring tone may denote a signal tone of the electronic device 101.

In operation 1220, the processor 120 may adjust the avatar video element (e.g., motion speed) by analyzing the ring tone configured in the electronic device 101. For example, the processor 120 may analyze a sound source of a ring tone designated for each contact identification information and an alarm sound designated in a call setting, and may analyze the movement of a motion included in the avatar video.

As an example, the processor 120 may analyze the ring tone to determine the movement speed of the motion and motion start and end points optimized for the ring tone. The processor 120 may adjust the avatar motion to move at a speed determined according to the start and end points of the motion determined in response to the analyzed ring tone. As another example, the processor 120 may adjust the avatar motion reproduction speed.

Independently or in parallel, in operation 1230, the processor 120 may analyze a UI element of the screen of the electronic device to which the avatar video is applied, and in operation 1240, the processor may adjust elements of the avatar video according to the screen UI element.

As an example, the processor 120 may determine the position and size at which an avatar is to be displayed by analyzing the positions of a call screen UI object selected by the user and lock screen UI objects configured by the user in the call background source. As another example, the processor 120 may adjust the size and position of the avatar when the motion falls out of the display size by analyzing a radius of action of the avatar's motion and the usable display size (e.g., the size of the display area).

Independently or in parallel, in operation 1250, the processor 120 may identify a user context according to the electronic device situation. For example, the electronic device 101 may identify information about whether the user designates a landscape mode or a portrait mode, and screen resolution information.

In operation 1260, the processor 120 may adjust the elements of the avatar video based on the analysis of the user context. As an example, when the display mode of the electronic device is changed to the landscape mode, the processor 120 may determine a position and size at which the avatar is to be displayed according to the landscape mode change, and may adjust the position and size.

In operation 1270, the processor 120 may reproduce the avatar video based on the adjusted elements.

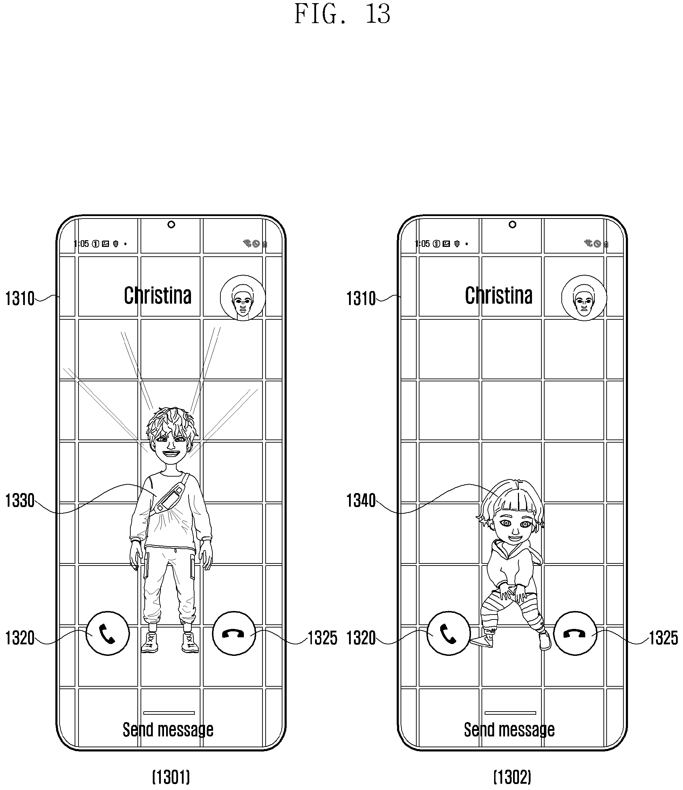

FIG. 13 illustrates an avatar video user interface environment of an electronic device according to various embodiments.

Referring to FIG. 13, the electronic device 101 according to an embodiment may adjust and express an avatar video, which is configured on a call screen, for each occasion according to user context.

The electronic device 101 may configure a call screen 1310 as an avatar video shown in <1301>. The call screen 1310 may include an avatar 1330, the motion of which is to be reproduced by the configured avatar video, a reception approval object 1320, and a reception rejection object 1325.

Based on reception of a call from a counterpart device, the electronic device 101 may identify whether a counterpart avatar exists in response to identification information of the counterpart device, and if the counterpart avatar exists, the electronic device 101 may display, as shown in <1302>, the call screen 1310 by replacing an avatar to be reproduced in the avatar video by a counterpart avatar 1340. The electronic device 101 may maintain settings for a motion, a background source, and music of the avatar video, and may replace avatar data only and display same.

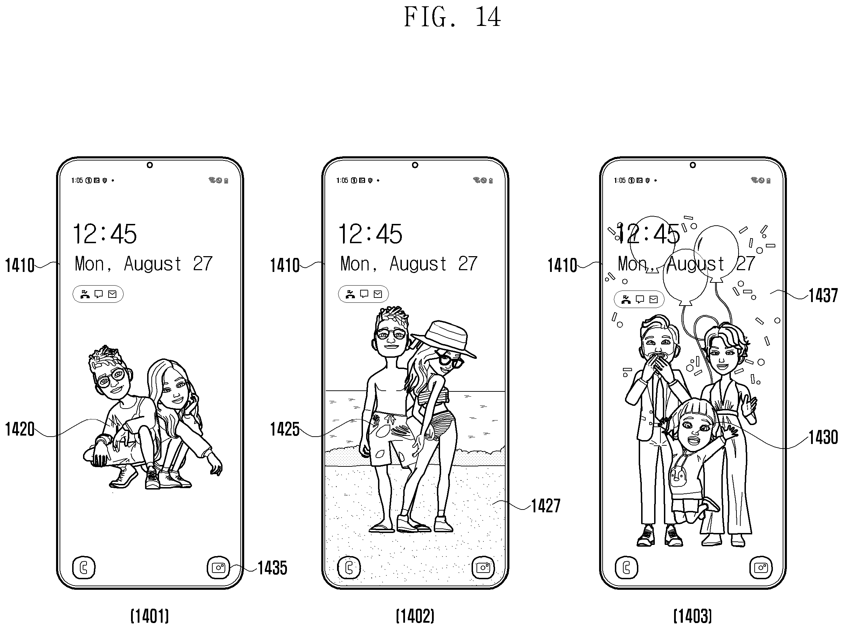

FIG. 14 illustrates an avatar video user interface environment of an electronic device according to various embodiments.

Referring to FIG. 14, the electronic device 101 according to an embodiment may change avatar clothes, motions, background sources, and accessories according to a current time, a place in which the electronic device 101 is located, and an occasion.

The electronic device 101 may configure a lock screen 1410 as an avatar video shown in <1401>. The lock screen 1410 may include an avatar 1420 to be reproduced by the avatar video, an emergency call item 1430, and a camera item 1435.

For example, when the electronic device 101 analyzes position information and schedule information to determine that the electronic device is located in a place corresponding to summer or recreation, the electronic device may recommend a wearing item (e.g., accessories or clothes) 1425 suitable for a resort and display change to the recommended wearing item 1425 for the avatar, and may recommend the background image as a background image 1427 suitable for summer or recreation and change and display the background image, as shown in <1402>.

As another example, the electronic device 101 analyzes anniversary information (e.g., birthday or 1st anniversary) to determine that the current time corresponds to the anniversary, the electronic device 101 may recommend and display an avatar 1430 suitable for the anniversary on the lock screen 1410, and may recommend and display a celebration animation effect 1437 thereon, as shown in <1403>.

As another example, when the electronic device is determined to be located in the company according to the position information, the electronic device 101 may transform the avatar video configured on the lock screen into an avatar wearing items suitable for the company and display the same, and when the electronic device is located at home, the electronic device may transform the avatar into an avatar wearing items suitable for home and display the same. Alternatively, when it is determined that it is raining or snowing outside based on weather information, the electronic device 101 may add a snow effect or a rain effect to the background source image of the avatar video configured on the lock screen and display the same.

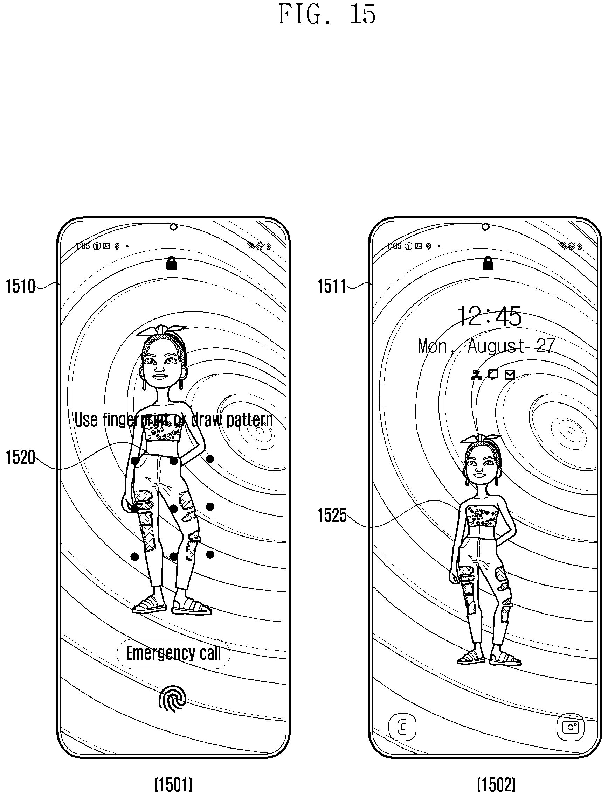

FIG. 15 illustrates an avatar video user interface environment of an electronic device according to various embodiments.

Referring to FIG. 15, in response to changes in screen UI object configurations, the electronic device 101 according to an embodiment may apply and change an avatar arrangement structure suitable for a screen UI object change.

As shown in <1501>, the electronic device 101 may configure a unlock screen 1510 using the configured avatar video. The electronic device 101 may recommend and display an arrangement structure of the size and position of an avatar 1520 according to UI objects on the unlock screen.

When the electronic device 101 displays a lock screen 1511 as shown in <1502>, since the location, type, and size of UI objects displayed on the lock screen 1511 are changed, the electronic device 101 may analyze the UI objects on the screen and automatically adjust and display the size and position of an avatar 1525 so as not to overlap the UI objects on the screen.

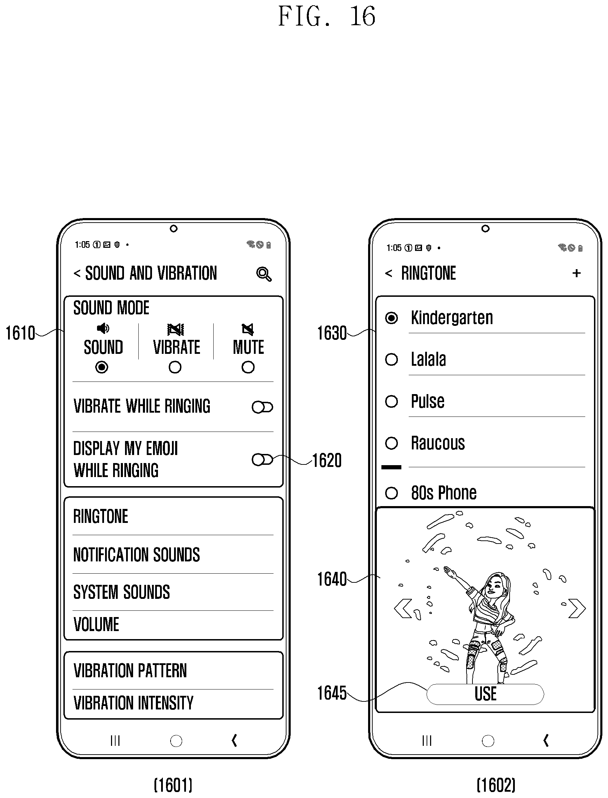

FIG. 16 illustrates an avatar video user interface environment of an electronic device according to various embodiments.

Referring to FIG. 16, the electronic device 101 according to an embodiment may provide an avatar video application on/off function option in a sound setting mode of the electronic device 101.

As shown in <1601>, the electronic device 101 may enter the sound setting mode of the electronic device and display a sound setting screen 1610. The sound setting screen 1610 may include various setting items related to sound setting of the electronic device, and may include an avatar video setting item 1620 as shown.

When a user wants to apply the avatar video on a call screen, the user may select and activate the avatar video setting item 1620.

In response to the selection of the avatar video setting item 1620 on the sound setting screen 1610, the electronic device 101 may provide a ringtone list 1630 as shown in <1602>. When a first ring tone (or bell sound) is selected from the ring tone list 1630, the electronic device 101 may provide a recommendation UI 1640 in which a motion and a background source suitable for the selected first ring tone are combined.

For example, when the first ring tone corresponds to a pleasure theme, the electronic device 101 may recommend, as the avatar video, a background source having many animation motions and a motion for exciting activities. As another example, if a second ring tone corresponds to a calm theme, the electronic device 101 may recommend, as the avatar video, a background source having a nature theme and a slow motion.

According to an embodiment, the electronic device 101 may analyze PBM information of the selected ring tone (e.g., the first ring tone) to recommend a motion in a range similar to the BPM, and may adjust the movement speed of the motion so as to be optimized for the PBM of the motion.

The electronic device 101 may display a motion and a background source recommended in different combinations in response to an input for selection of arrow items from the recommendation UI 1640.

The electronic device 101 may configure, as the avatar video, the motion and background source currently being reproduced in the recommendation UI 1640 together with the selected first ring tone in response to the selection of a use item 1645 included in the recommendation UI 1640. The electronic device 101 may reproduce the avatar video configured in the sound setting mode when receiving a call.

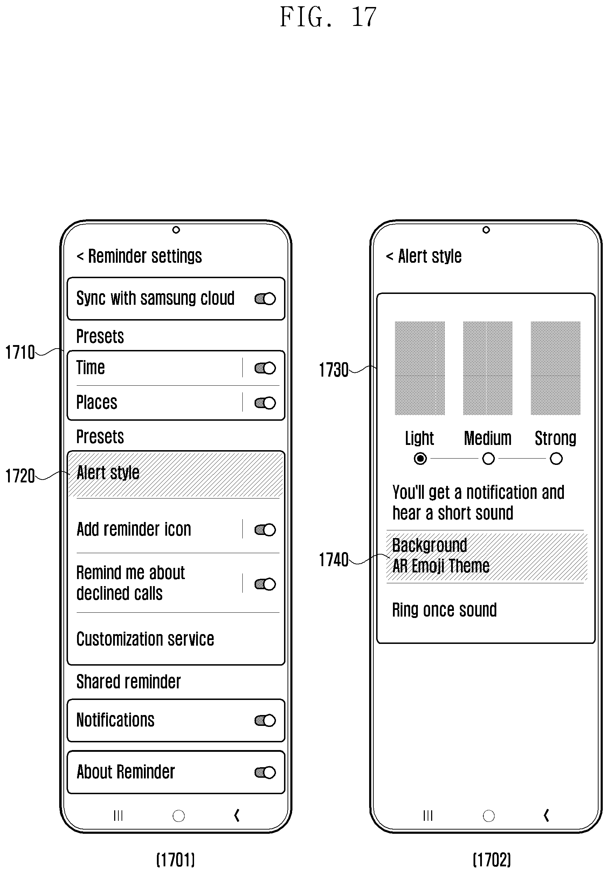

FIG. 17 illustrates an avatar video user interface environment of an electronic device according to various embodiments.

Referring to FIG. 17, the electronic device 101 according to an embodiment may provide an avatar video application on/off function option in a reminder alarm(or notification) setting mode of the electronic device 101.

As shown in <1701>, the electronic device 101 may enter a reminder notification setting mode of the electronic device 101 and display a reminder setting screen 1710. The reminder setting screen 1710 may include various setting items related to the reminder notification setting of the electronic device, and may include a notification style setting item 1720 as shown.

In response to the selection of the notification style setting item 1740 on the reminder notification setting screen 1710, the electronic device 101 may provide a notification style list 1730 as shown in <1702>. The electronic device 101 may provide a notification background source item 1740 in a notification style list 1730, and may provide a function of activating application of an avatar video in a notification background source item 1740 (e.g., ar emoji theme). Although not shown in the drawings, the electronic device 101 may provide a recommendation UI (e.g., refer to 1640 of FIG. 16) including a motion and a background source recommended for the set ring tone in response to the selection of the notification background source item 1740.

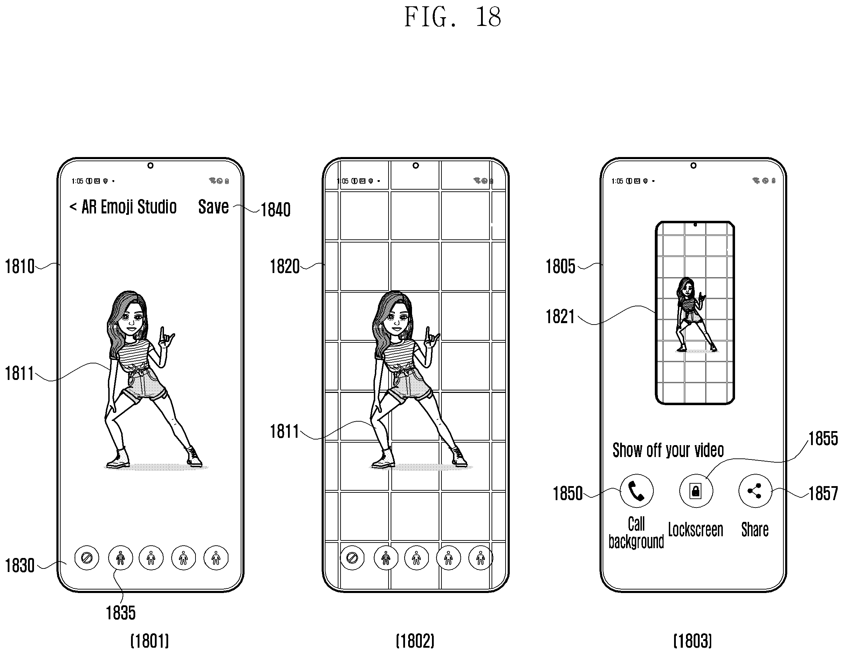

FIG. 18 illustrates an avatar video user interface environment of an electronic device according to various embodiments.

Referring to FIG. 18, the electronic device 101 according to an embodiment may select a motion from a motion list to generate a new avatar video, and then may provide a setting category to support a function of setting each screen.

As an example, the processor 120 of the electronic device 101 may provide a new avatar video generation item in an avatar service mode, and based on the selection of the new avatar video generation item, may provide a first screen 1810 including a motion list 1830 as shown in <1801>. In response to selection of a first motion 1835 from a motion list 1830 of the first screen 1810, the processor 120 may automatically recommend a background source and a sound source in response to the first motion, may display the recommended background source in the avatar showroom, and may switch to a second screen 1820 for outputting a sound source, as shown in <1802>, while moving an avatar 1811 in the selected first motion.

In response to the selection of a save item 1840, the processor 120 may generate an avatar video including a first motion of the avatar 1811 currently being reproduced in the avatar showroom and a background source and music recommended in response to the first motion, and, as shown in <1803>, the processor 120 may display a third screen 1805 for configuring the generated avatar video. The third screen 1805 may provide a thumbnail 1821 for the generated avatar video, and a setting category item to which the generated avatar video is to be applied, for example, a call setting item 1850, a lock screen setting item 1855, and a sharing item 1857. The setting category is not limited thereto, and may be provided as individual social network service items (e.g., Facebook items, Twitter items, Instagram items) for sharing.

According to an embodiment, the electronic device 101 may additionally provide the sharing function for the avatar video provided in the avatar service mode to various user interface environments (e.g., a call setting screen or a separate sharing menu option), and there is no limitation thereto.

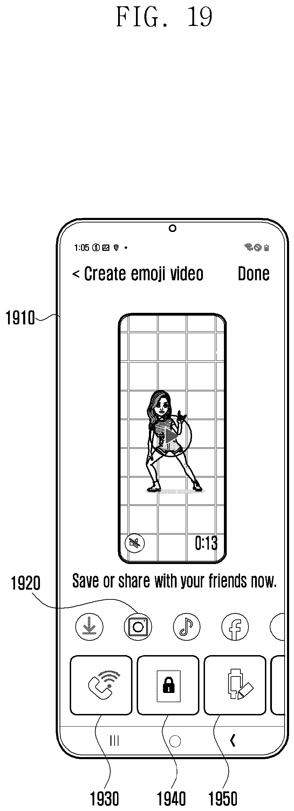

FIG. 19 illustrates an avatar video user interface environment of an electronic device according to various embodiments.

Referring to FIG. 19, the electronic device 101 according to an embodiment may support a function of setting each screen by providing a setting category after generating a new avatar video.

As an example, in response to completion of generation (or save) of a new avatar video in an avatar service mode, the processor 120 of the electronic device 101 may provide a setting screen 1910 including a sharing item 1920 by which an avatar video can be shared and a setting category (e.g., a call setting item 1930, a lock setting item 1940, and a watch setting item 1950).

For example, the processor 120 of the electronic device 101 may enter a new video setting mode and provide the avatar video list 330 of FIG. 3 or the motion list 1830 of FIG. 18. In response to selection of completion of generation of the avatar video (that is, including music and a background source recommended in response to a first motion) selected according to the user's request, the processor 120 may provide a sharing item and a setting category for setting each screen. When a first item among the sharing items is selected, the processor 120 may enter a sharing mode related to the selected first item. When a call setting item 1930 is selected from the setting category, the processor 120 may set a call screen using an avatar video displayed on the setting screen.

A method of operating an avatar video service of an electronic device according to various embodiments may include providing a screen setting category in an avatar video mode when an avatar service is executed, providing an avatar video list obtained by combining at least one of a sound source, a background source, and an avatar arrangement structure, which are recommended for each avatar motion, in response to selection of a first screen setting category from the screen setting category, and configuring a screen of the selected first screen setting category such that a first avatar video is reproduced, in response to selection of the first avatar video from the avatar video list.

The providing of the avatar video list may include providing, in the form of thumbnails, avatar videos configured by combining a sound source and a background source for each motion based on an avatar video template configured to include a motion, a sound source, and a background source.

The providing of the avatar video list may further include recommending a sound source suitable for each motion by comparing each piece of motion information with a sound source database stored in the memory, and recommending a background source image suitable for motion information stored in the memory from an image database stored in the memory, so as to configure the avatar video.

The providing of the avatar video list may further include receiving, from a server, an avatar video package to which music and a background source recommended for each motion are automatically applied, and providing the received avatar package to the avatar video list.

The screen setting category may include at least one of a call screen setting item, a lock screen setting item, a reminder notification screen setting item, a background source screen setting item, an alarm screen setting item, and a sharing setting item.

The method may further include displaying a screen on which an avatar video is configured after performing configuration such that the first avatar video is reproduced, wherein the displaying of the screen on which the first avatar video is configured includes at least one of operations of performing a mute activation function based on at least one of position information of user interface objects arranged on the screen on which the first avatar video is configured, and usage context situation information, time information, position information, and schedule information of the electronic device, adjusting and displaying the size and position of an avatar included in the first avatar video, and adjusting and displaying the size and position of a background source included in the first avatar video.

## Claims

1. An electronic device (101) comprising:
a display;
at least one processor (120); and
a memory (130),
wherein the memory (130) includes instructions executable by the at least one processor (120) to:
when executing an avatar service application as part of a video avatar mode, display a user interface of the avatar service application on the display including a plurality of screen setting categories (315), wherein the plurality of screen setting categories includes at least one of a call screen setting item, a lock screen setting item, a reminder notification screen setting item, a background source screen setting item, an alarm screen setting item, and a sharing setting item,
detect selection of a first screen setting category item from among the plurality of screen setting categories (315), and based on the detected selection, display an avatar video list (330) including a plurality of avatar videos, wherein each of the plurality of avatar videos comprises a sound source, a background source, and an arrangement structure of an avatar, wherein the sound, the background source, and the arrangement structure are selected corresponding to a first motion or animation among a plurality of animations or motions,
in response to selection of a first avatar video (331) among the avatar video list (330), apply the first avatar video to a screen related to the selected first screen setting category, and
when the screen on which the first avatar video is generated is displayed, identify a usage context change of the electronic device (101), wherein the usage context change comprises at least one of a change in screen and sound-related settings or a change in time, an occasion and a location of the electronic device (101); and
perform at least one of activating a mute function, adjusting the size and position of the avatar included in the first avatar video, changing accessories of the avatar included in the first avatar video, or adjusting the size and position of the background source based on the usage context change.

2. The electronic device (101) of claim 1, wherein the memory (130) further includes instructions executable by the at least one processor (120) to:
provide the avatar video in the form of a thumbnail to the avatar video list (330).

3. The electronic device (101) of claim 2, wherein the memory (130) stores a plurality of animations or motion databases, a sound source database, and an image source database, wherein the memory (130) further includes instructions executable by the at least one processor (120) to:
select the sound source suitable for each motion from the sound source database stored in the memory (130), and select a background image suitable for each motion from an image database stored in the memory (130), so as to generate the avatar video.

4. The electronic device (101) of claim 1, wherein the memory (130) further includes instructions executable by the at least one processor (120) to:
provide an avatar video package, to which the sound source and the background source selected for each motion are automatically applied, to the avatar video list (330) from a server.

5. The electronic device (101) of claim 1,
wherein the memory (130) includes instructions executable by the at least one processor (120) to:
in response to a user input for entering an individual setting mode for each screen setting category, display a screen for entering a selected individual setting mode on the display, and generate an avatar video selected in response to a user input request on each screen.

6. The electronic device (101) of claim 2, wherein the memory (130) further includes instructions executable by the at least one processor (120) to:
select one sound source through at least one of selection of a sound source matching beats per minute, bpm, information of each motion, selection of a sound source corresponding to a music genre theme of each motion, or selection of a sound source matching identification information of each motion, and
select a sound source having a higher priority based on at least one of sound source preference, metadata comparison order, and the number of times of reproductions when multiple sound sources are selected.

7. The electronic device (101) of claim 1, wherein the memory (130) further includes instructions executable by the at least one processor (120) to:
identify the size of the display,
identify a spatial region in which the avatar is to be displayed according to the display size, and change, and
display the size and position of the avatar to be displayed when the first avatar video is reproduced based on the spatial region.

8. The electronic device (101) of claim 1, wherein the memory (130) further includes instructions executable by the at least one processor (120) to:
provide an avatar editing function in the first avatar video (331) reproduce mode, and
perform at least one of adjustment of the size and position of an avatar through the avatar editing function according to a user request, changing of the sound source recommended in the first avatar video (331), or editing and changing of the background source recommended in the first avatar video (331).

9. The electronic device (101) of claim 1, wherein the memory (130) further includes instructions executable by the at least one processor (120) to, when a lock screen or the background source screen is set, activate a mute function of the sound source combined in the avatar video.

10. The electronic device (101) of claim 1, wherein the memory (130) further includes instructions executable by the at least one processor (120) to, when a screen applied avatar video is displayed, display user interface objects arranged on the screen by adjusting the size and position of an avatar included in the avatar video or adjusting the size and position of the background source according to the position.

11. The electronic device (101) of 1, wherein the memory (130) further includes instructions executable by the at least one processor (120) to, when a screen applied avatar video is displayed, change an avatar costume, the background source, and accessories included in an avatar video, which is generated according to time information, position information, and schedule information, to other optimized items and display the same.

12. The electronic device (101) of 1, wherein the memory (130) further includes instructions executable by the at least one processor (120) to:
provide a new avatar video generation item in the avatar video mode, and provide the avatar video list (330) based on selection of the new avatar video generation item, and
in response to storing a second avatar video selected from the avatar video list (330), provide, on the display, sharing items and setting category items for generating the second avatar video.

13. The electronic device (101) of claim 1, wherein the memory (130) further includes instructions executable by the at least one processor (120) to:
provide a new avatar video generation item in the avatar video mode, and provide a motion list based on selection of the new avatar video generation item,
in response to selection of a first motion from the motion list, reproduce, in an avatar show room, a second avatar video obtained by combining the background source and music, which are recommended in response to a first motion, and
in response to storing the second avatar video, provide sharing items and setting category items for generating the second avatar video on the display.

14. A method for operating an avatar video service of an electronic device (101), the method comprising:
executing, by at least one processor (120), an avatar service application as part of a video avatar mode, and displaying, via a display, a user interface of the avatar service application, including a plurality of screen setting categories (315), wherein the plurality of screen setting categories includes at least one of a call screen setting item, a lock screen setting item, a reminder notification screen setting item, a background source screen setting item, an alarm screen setting item, and a sharing setting item;
detecting, via input circuitry, selection of a first screen setting category item from among the plurality of screen setting categories (315), and based on the detected selection, displaying an avatar video list (330) including a plurality of avatar videos, wherein each of the plurality of avatar video comprises at least a sound source, a background source, and an arrangement structure of an avatar, wherein the sound source, the background source, and the arrangement structure are selected corresponding to a first motion or animation among a plurality of animations or motions;
based on detecting selection of a first avatar video (331) among the avatar video list (330), applying the first avatar video (331) to a screen related to the selected first screen setting category;
when the screen on which the first avatar video is generated is displayed, identifying a usage context change of the electronic device (101), wherein the usage context change comprises at least one of a change in screen and sound-related settings or a change in time, an occasion and a location of the electronic device (101); and
performing at least one of activating a mute function, adjusting the size and position of the avatar included in the first avatar video, changing accessories of the avatar included in the first avatar video, or adjusting the size and position of the background source based on the usage context change.

## Patentansprüche

1. Elektronische Vorrichtung (101), umfassend:
eine Anzeige;
mindestens einen Prozessor (120); und
einen Speicher (130),
wobei der Speicher (130) Anweisungen enthält, die durch den mindestens einen Prozessor (120) ausführbar sind, um:
beim Ausführen einer Avatar-Dienstanwendung als Teil eines Video-Avatar-Modus eine Benutzeroberfläche der Avatar-Dienstanwendung auf der Anzeige anzuzeigen, die eine Mehrzahl von Bildschirmeinstellungskategorien (315) umfasst, wobei die Mehrzahl von Bildschirmeinstellungskategorien mindestens eines von einem Anrufbildschirm-Einstellelement, einem Sperrbildschirm-Einstellelement, einem Erinnerungsbenachrichtigungsbildschirm-Einstellelement, einem Hintergrundquellenbildschirm-Einstellelement, einem Alarmbildschirm-Einstellelement und einem Freigabe-Einstellelement umfasst;
eine Auswahl eines ersten Bildschirmeinstellungskategorieelements aus der Mehrzahl von Bildschirmeinstellungskategorien (315) zu erfassen; bezogen auf die erfasste Auswahl eine Avatar-Videoliste (330) anzuzeigen, die eine Mehrzahl von Avatar-Videos umfasst, wobei jedes der Mehrzahl von Avatar-Videos eine Tonquelle, eine Hintergrundquelle und eine Anordnungsstruktur eines Avatars umfasst, wobei der Ton, die Hintergrundquelle und die Anordnungsstruktur entsprechend einer ersten Bewegung oder Animation aus einer Mehrzahl von Animationen oder Bewegungen ausgewählt sind;
als Reaktion auf eine Auswahl eines ersten Avatar-Videos (331) aus der Avatar-Videoliste (330) das erste Avatar-Video auf einen Bildschirm bezogen auf die ausgewählte erste Bildschirmeinstellungskategorie anzuwenden; und
wenn der Bildschirm, auf dem das erste Avatar-Video erzeugt wird, angezeigt wird, eine Nutzungskontextänderung der elektronischen Vorrichtung (101) zu identifizieren, wobei die Nutzungskontextänderung mindestens eines von einer Änderung von bildschirm- und tonbezogenen Einstellungen oder einer Änderung von Zeit, einem Anlass und einem Standort der elektronischen Vorrichtung (101) umfasst; und
mindestens eines von einem Aktivieren einer Stummschaltfunktion, einem Anpassen der Größe und Position des in dem ersten Avatar-Video enthaltenen Avatars, einem Ändern von Zubehör des in dem ersten Avatar-Video enthaltenen Avatars oder einem Anpassen der Größe und Position der Hintergrundquelle bezogen auf die Nutzungskontextänderung durchzuführen.

2. Elektronische Vorrichtung (101) nach Anspruch 1, wobei der Speicher (130) ferner Anweisungen enthält, die durch den mindestens einen Prozessor (120) ausführbar sind, um:
das Avatar-Video in Form eines Miniaturbilds für die Avatar-Videoliste (330) bereitzustellen.

3. Elektronische Vorrichtung (101) nach Anspruch 2, wobei der Speicher (130) eine Mehrzahl von Animations- oder Bewegungsdatenbanken, eine Tonquellendatenbank und eine Bildquellendatenbank speichert, wobei der Speicher (130) ferner Anweisungen enthält, die durch den mindestens einen Prozessor (120) ausführbar sind, um:
die für jede Bewegung geeignete Tonquelle aus der in dem Speicher (130) gespeicherten Tonquellendatenbank auszuwählen; und ein für jede Bewegung geeignetes Hintergrundbild aus einer in dem Speicher (130) gespeicherten Bilddatenbank auszuwählen, um so das Avatar-Video zu erzeugen.

4. Elektronische Vorrichtung (101) nach Anspruch 1, wobei der Speicher (130) ferner Anweisungen enthält, die durch den mindestens einen Prozessor (120) ausführbar sind, um:
ein Avatar-Videopaket, auf welches die für jede Bewegung ausgewählte Tonquelle und die Hintergrundquelle automatisch angewendet werden, für die Avatar-Videoliste (330) von einem Server bereitzustellen.

5. Elektronische Vorrichtung (101) nach Anspruch 1,
wobei der Speicher (130) Anweisungen enthält, die durch den mindestens einen Prozessor (120) ausführbar sind, um:
als Reaktion auf eine Benutzereingabe zum Aufrufen eines individuellen Einstellmodus für jede Bildschirmeinstellungskategorie einen Bildschirm zum Aufrufen eines ausgewählten individuellen Einstellmodus auf der Anzeige anzuzeigen; und ein Avatar-Video, das als Reaktion auf eine Benutzereingabeanforderung auf jedem Bildschirm ausgewählt wird, zu erzeugen.

6. Elektronische Vorrichtung (101) nach Anspruch 2, wobei der Speicher (130) ferner Anweisungen enthält, die durch den mindestens einen Prozessor (120) ausführbar sind, um:
eine Tonquelle durch mindestens eines von einer Auswahl einer Tonquelle, die Schlägen pro Minute, bpm, Informationen jeder Bewegung entspricht, einer Auswahl einer Tonquelle entsprechend einem Musikgenrethema jeder Bewegung oder einer Auswahl einer Tonquelle, die Identifikationsinformationen jeder Bewegung entspricht, auszuwählen; und
eine Tonquelle mit einer höheren Priorität bezogen auf mindestens eines von einer Tonquellenpräferenz, einer Metadatenvergleichsreihenfolge und der Anzahl der Wiedergaben auszuwählen, wenn mehrere Tonquellen ausgewählt sind.

7. Elektronische Vorrichtung (101) nach Anspruch 1, wobei der Speicher (130) ferner Anweisungen enthält, die durch den mindestens einen Prozessor (120) ausführbar sind, um:
die Größe der Anzeige zu identifizieren;
einen räumlichen Bereich zu identifizieren, in dem der Avatar gemäß der Anzeigegröße anzuzeigen ist; und
die Größe und Position des anzuzeigenden Avatars zu ändern und anzuzeigen, wenn das erste Avatar-Video bezogen auf den räumlichen Bereich wiedergegeben wird.

8. Elektronische Vorrichtung (101) nach Anspruch 1, wobei der Speicher (130) ferner Anweisungen enthält, die durch den mindestens einen Prozessor (120) ausführbar sind, um:
eine Avatar-Bearbeitungsfunktion in dem Wiedergabemodus des ersten Avatar-Videos (331) bereitzustellen; und
mindestens eines von einer Anpassung der Größe und Position eines Avatars durch die Avatar-Bearbeitungsfunktion gemäß einer Benutzeranforderung, einem Ändern der in dem ersten Avatar-Video (331) empfohlenen Tonquelle oder einem Bearbeiten und Ändern der in dem ersten Avatar-Video (331) empfohlenen Hintergrundquelle durchzuführen.

9. Elektronische Vorrichtung (101) nach Anspruch 1, wobei der Speicher (130) ferner Anweisungen enthält, die durch den mindestens einen Prozessor (120) ausführbar sind, um: wenn ein Sperrbildschirm oder der Hintergrundquellenbildschirm eingestellt ist, eine Stummschaltfunktion der in dem Avatar-Video kombinierten Tonquelle zu aktivieren.

10. Elektronische Vorrichtung (101) nach Anspruch 1, wobei der Speicher (130) ferner Anweisungen enthält, die durch den mindestens einen Prozessor (120) ausführbar sind, um: wenn ein Bildschirm mit angewendetem Avatar-Video angezeigt wird, auf dem Bildschirm angeordnete Benutzeroberflächenobjekte durch Anpassen der Größe und Position eines in dem Avatar-Video enthaltenen Avatars oder durch Anpassen der Größe und Position der Hintergrundquelle gemäß der Position anzuzeigen.

11. Elektronische Vorrichtung (101) nach Anspruch 1, wobei der Speicher (130) ferner Anweisungen enthält, die durch den mindestens einen Prozessor (120) ausführbar sind, um: wenn ein Bildschirm mit angewendetem Avatar-Video angezeigt wird, ein Avatar-Kostüm, die Hintergrundquelle und in einem Avatar-Video enthaltenes Zubehör, welches gemäß Zeitinformationen, Positionsinformationen und Zeitplaninformationen erzeugt wird, in andere optimierte Elemente zu ändern und dieselben anzuzeigen.

12. Elektronische Vorrichtung (101) nach Anspruch 1, wobei der Speicher (130) ferner Anweisungen enthält, die durch den mindestens einen Prozessor (120) ausführbar sind, um:
ein Element zur Erzeugung eines neuen Avatar-Videos in dem Video-Avatar-Modus bereitzustellen; die Avatar-Videoliste (330) bezogen auf eine Auswahl des Elements zur Erzeugung eines neuen Avatar-Videos bereitzustellen; und
als Reaktion auf ein Speichern eines zweiten Avatar-Videos, das aus der Avatar-Videoliste (330) ausgewählt wird, Freigabeelemente und Einstellungskategorieelemente zum Erzeugen des zweiten Avatar-Videos auf der Anzeige bereitzustellen.

13. Elektronische Vorrichtung (101) nach Anspruch 1, wobei der Speicher (130) ferner Anweisungen enthält, die durch den mindestens einen Prozessor (120) ausführbar sind, um:
ein Element zur Erzeugung eines neuen Avatar-Videos in dem Video-Avatar-Modus bereitzustellen; eine Bewegungsliste bezogen auf eine Auswahl des Elements zur Erzeugung eines neuen Avatar-Videos bereitzustellen;
als Reaktion auf eine Auswahl einer ersten Bewegung aus der Bewegungsliste in einem Avatar-Showroom ein zweites Avatar-Video wiederzugeben, das durch Kombinieren der Hintergrundquelle und Musik erhalten wird, welche als Reaktion auf eine erste Bewegung empfohlen werden; und
als Reaktion auf ein Speichern des zweiten Avatar-Videos Freigabeelemente und Einstellungskategorieelemente zum Erzeugen des zweiten Avatar-Videos auf der Anzeige bereitzustellen.

14. Verfahren zum Betrieb eines Avatar-Videodienstes einer elektronischen Vorrichtung (101), wobei das Verfahren umfasst:
Ausführen, durch mindestens einen Prozessor (120), einer Avatar-Dienstanwendung als Teil eines Video-Avatar-Modus, und Anzeigen, über eine Anzeige, einer Benutzeroberfläche der Avatar-Dienstanwendung, die eine Mehrzahl von Bildschirmeinstellungskategorien (315) umfasst, wobei die Mehrzahl von Bildschirmeinstellungskategorien mindestens eines von einem Anrufbildschirm-Einstellelement, einem Sperrbildschirm-Einstellelement, einem Erinnerungsbenachrichtigungsbildschirm-Einstellelement, einem Hintergrundquellenbildschirm-Einstellelement, einem Alarmbildschirm-Einstellelement und einem Freigabe-Einstellelement umfasst;
Erfassen, über einen Eingabeschaltkreis, einer Auswahl eines ersten Bildschirmeinstellungskategorieelements aus der Mehrzahl von Bildschirmeinstellungskategorien (315); Anzeigen, bezogen auf die erfasste Auswahl, einer Avatar-Videoliste (330), die eine Mehrzahl von Avatar-Videos umfasst, wobei jedes der Mehrzahl von Avatar-Videos mindestens eine Tonquelle, eine Hintergrundquelle und eine Anordnungsstruktur eines Avatars umfasst, wobei die Tonquelle, die Hintergrundquelle und die Anordnungsstruktur entsprechend einer ersten Bewegung oder Animation aus einer Mehrzahl von Animationen oder Bewegungen ausgewählt werden;
bezogen auf ein Erfassen einer Auswahl eines ersten Avatar-Videos (331) aus der Avatar-Videoliste (330), Anwenden des ersten Avatar-Videos (331) auf einen Bildschirm bezogen auf die ausgewählte erste Bildschirmeinstellungskategorie;
wenn der Bildschirm, auf dem das erste Avatar-Video erzeugt wird, angezeigt wird, Identifizieren einer Nutzungskontextänderung der elektronischen Vorrichtung (101), wobei die Nutzungskontextänderung mindestens eines von einer Änderung von bildschirm- und tonbezogenen Einstellungen oder einer Änderung von Zeit, einem Anlass und einem Standort der elektronischen Vorrichtung (101) umfasst; und
Durchführen mindestens eines von einem Aktivieren einer Stummschaltfunktion, einem Anpassen der Größe und Position des in dem ersten Avatar-Video enthaltenen Avatars, einem Ändern von Zubehör des in dem ersten Avatar-Video enthaltenen Avatars oder einem Anpassen der Größe und Position der Hintergrundquelle bezogen auf die Nutzungskontextänderung.

## Revendications

1. Dispositif électronique (101), comprenant :
un afficheur ;
au moins un processeur (120) ; et
une mémoire (130),
dans lequel la mémoire (130) inclut des instructions exécutables par l'au moins un processeur (120) pour :
lors d'exécuter une application de service d'avatar faisant partie d'un mode d'avatar vidéo, afficher une interface utilisateur de l'application de service d'avatar sur l'afficheur incluant une pluralité de catégories de paramétrages d'écran (315), la pluralité de catégories de paramétrages d'écran comportant au moins un parmi un élément de paramétrage d'écran d'appel, un élément de paramétrage d'écran de verrouillage, un élément de paramétrage d'écran de notification de rappel, un élément de paramétrage de source d'arrière-plan, un élément de paramétrage d'écran d'alarme, et un élément de paramétrage de partage,
détecter une sélection d'un premier élément de catégorie de paramétrages d'écran parmi la pluralité de catégories de paramétrages d'écran (315), et sur la base de la sélection détectée, afficher une liste de vidéos d'avatar (330) incluant une pluralité de vidéos d'avatar, chacune de la pluralité de vidéo d'avatar comprenant une source de son, une source d'arrière-plan, et une structure d'agencement d'un avatar, le son, la source d'arrière-plan et la structure d'agencement étant sélectionnées en correspondance avec un premier mouvement ou animation parmi une pluralité d'animations ou de mouvements,
en réponse à la sélection d'une première vidéo d'avatar (331) dans la liste de vidéos d'avatar (330), appliquer la première vidéo d'avatar à un écran lié à la première catégorie de paramétrages d'écran sélectionnée, et
lorsque l'écran sur lequel est générée la première vidéo d'avatar est affiché, identifier un changement de contexte d'utilisation du dispositif électronique (101), le changement de contexte d'utilisation comprenant au moins un parmi un changement dans les paramétrages liés à l'écran et au son ou un changement de l'heure, une occasion et un emplacement du dispositif électronique (101) ; et
effectuer au moins un parmi les suivants : activer une fonction muette, ajuster la taille et la position de l'avatar inclus dans la première vidéo d'avatar, changer des accessoires de l'avatar inclus dans la première vidéo d'avatar, ou ajuster la taille et la position de la source d'arrière-plan sur la base du changement de contexte d'utilisation.

2. Dispositif électronique (101) selon la revendication 1, dans lequel la mémoire (130) inclut en outre des instructions exécutables par l'au moins un processeur (120) pour :
fournir la vidéo d'avatar sous forme de miniature à la liste de vidéos d'avatar (330).

3. Dispositif électronique (101) selon la revendication 2, dans lequel la mémoire (130) stocke une pluralité de bases de données d'animations ou de mouvements, et une base de données de sources de son, dans lequel la mémoire (130) inclut en outre des instructions exécutables par l'au moins un processeur (120) pour :
sélectionner la source de son appropriée à chaque mouvement de la base de données de sources de son stockée dans la mémoire (130), et sélectionner une image d'arrière-plan appropriée à chaque mouvement d'une base de données d'images stockée dans la mémoire (130), afin de générer la vidéo d'avatar.

4. Dispositif électronique (101) selon la revendication 1, dans lequel la mémoire (130) inclut en outre des instructions exécutables par l'au moins un processeur (120) pour :
fournir un paquet de vidéos d'avatar, auquel sont automatiquement appliquées la source de son et la source d'arrière-plan sélectionnées pour chaque mouvement, à la liste de vidéos d'avatar (330) d'un serveur.

5. Dispositif électronique (101) selon la revendication 1,
dans lequel la mémoire (130) inclut des instructions exécutables par l'au moins un processeur (120) pour :
en réponse à une entrée utilisateur pour entrer en mode de paramétrage individuel pour chaque catégorie de paramétrages d'écran, afficher un écran pour entrer en mode de paramétrage individuel sélectionné sur l'afficheur, et générer une vidéo d'avatar sélectionnée en réponse à une demande d'entrée utilisateur sur chaque écran.

6. Dispositif électronique (101) selon la revendication 2, dans lequel la mémoire (130) inclut en outre des instructions exécutables par l'au moins un processeur (120) pour :
sélectionner une source de son via au moins une parmi une sélection d'une source de son correspondant à des informations de battements par minute, bpm, de chaque mouvement, une sélection d'une source de son correspondant à un thème de genre musical de chaque mouvement, ou une sélection d'une source de son correspondant à des informations d'identification de chaque mouvement, et
sélectionner une source de son présentant une priorité plus élevée sur la base d'au moins un parmi une préférence de source de son, un ordre de comparaison de métadonnées, et le nombre de reproductions lorsque plusieurs sources de son sont sélectionnées.

7. Dispositif électronique (101) selon la revendication 1, dans lequel la mémoire (130) inclut en outre des instructions exécutables par l'au moins un processeur (120) pour :
identifier la taille de l'afficheur,
identifier une zone spatiale dans laquelle l'avatar doit être affiché en fonction de la taille de l'afficheur, et changer, et
afficher la taille et la position de l'avatar à afficher lorsque la première vidéo d'avatar est reproduite sur la base de la zone spatiale.

8. Dispositif électronique (101) selon la revendication 1, dans lequel la mémoire (130) inclut en outre des instructions exécutables par l'au moins un processeur (120) pour :
fournir une fonction d'édition d'avatar en mode de reproduction de la première vidéo d'avatar (331), et
effectuer au moins un parmi un ajustement de la taille et de la position d'un avatar via la fonction d'édition d'avatar selon une demande utilisateur, un changement de la source de son recommandée dans la première vidéo d'avatar (331), ou une édition et un changement de la source d'arrière-plan recommandée dans la première vidéo d'avatar (331).

9. Dispositif électronique (101) selon la revendication 1, dans lequel la mémoire (130) comprend en outre des instructions exécutables par l'au moins un processeur (120), lorsqu'un écran de verrouillage ou l'écran de source d'arrière-plan est paramétré, activer une fonction muette de la source de son combinée dans la vidéo d'avatar.

10. Dispositif électronique (101) selon la revendication 1, dans lequel la mémoire (130) comprend en outre des instructions exécutables par l'au moins un processeur (120) pour, lorsqu'une vidéo d'avatar appliquée à l'écran est affichée, afficher des objets d'interface utilisateur disposés sur l'écran en ajustant la taille et la position d'un avatar inclus dans la vidéo d'avatar ou en ajustant la taille et la position de la source d'arrière-plan selon la position.

11. Dispositif électronique (101) selon la revendication 1, dans lequel la mémoire (130) comprend en outre des instructions exécutables par l'au moins un processeur (120) pour, lorsqu'une vidéo d'avatar appliquée à l'écran est affichée, changer un costume d'avatar, la source d'arrière-plan et des accessoires inclus dans une vidéo d'avatar, qui est générée en fonction des informations de temps, des informations de position et des informations d'horaire, à d'autres éléments optimisés et les afficher.

12. Dispositif électronique (101) selon la revendication 1, dans lequel la mémoire (130) inclut en outre des instructions exécutables par l'au moins un processeur (120) pour :
fournir un nouvel élément de génération de vidéo d'avatar en mode de vidéo d'avatar, et fournir la liste de vidéos d'avatar (330) sur la base d'une sélection du nouvel élément de génération de vidéo d'avatar, et
en réponse au stockage d'une deuxième vidéo d'avatar sélectionnée dans la liste de vidéos d'avatar (330), fournir, sur l'afficheur, des éléments de partage et des éléments de catégorie de paramétrages pour générer la deuxième vidéo d'avatar.

13. Dispositif électronique (101) selon la revendication 1, dans lequel la mémoire (130) inclut en outre des instructions exécutables par l'au moins un processeur (120) pour :
fournir un nouvel élément de génération de vidéo d'avatar en mode de vidéo d'avatar, et fournir une liste de mouvements sur la base d'une sélection du nouvel élément de génération de vidéo d'avatar,
en réponse à la sélection d'un premier mouvement de la liste de mouvements, reproduire, dans une salle d'exposition d'avatar, une deuxième vidéo d'avatar obtenue en combinant la source d'arrière-plan et une musique, qui sont recommandées en réponse à un premier mouvement, et
en réponse au stockage de la deuxième vidéo d'avatar, fournir des éléments de partage et des éléments de catégorie de paramétrages pour générer la deuxième vidéo d'avatar sur l'afficheur.

14. Procédé de fonctionnement d'un service vidéo d'avatar d'un dispositif électronique (101), le procédé comprenant :
exécuter, par au moins un processeur (120), une application de service d'avatar faisant partie d'un mode d'avatar vidéo, afficher, par un afficheur, une interface utilisateur de l'application de service d'avatar, incluant une pluralité de catégories de paramétrages d'écran (315), la pluralité de catégories de paramétrages d'écran comportant au moins un parmi un élément de paramétrage d'écran d'appel, un élément de paramétrage d'écran de verrouillage, un élément de paramétrage d'écran de notification de rappel, un élément de paramétrage de source d'arrière-plan, un élément de paramétrage d'écran d'alarme, et un élément de paramétrage de partage ;
détecter, par un circuit d'entrée, une sélection d'un premier élément de catégorie de paramétrages d'écran parmi la pluralité de catégories de paramétrages d'écran (315), et sur la base de la sélection détectée, afficher une liste de vidéos d'avatar (330) incluant une pluralité de vidéos d'avatar, chacune de la pluralité de vidéo d'avatar comprenant au moins une source de son, une source d'arrière-plan, et une structure d'agencement d'un avatar, le son, la source d'arrière-plan et la structure d'agencement étant sélectionnées en correspondance avec un premier mouvement ou animation parmi une pluralité d'animations ou de mouvements ;
sur la base d'une détection de sélection d'une première vidéo d'avatar (331) dans la liste de vidéos d'avatar (330), appliquer la première vidéo d'avatar (331) à un écran lié à la première catégorie de paramétrages d'écran sélectionnée ;
lorsque l'écran sur lequel est générée la première vidéo d'avatar est affiché, identifier un changement de contexte d'utilisation du dispositif électronique (101), le changement de contexte d'utilisation comprenant au moins un parmi un changement dans les paramétrages liés à l'écran et au son ou un changement de l'heure, une occasion et un emplacement du dispositif électronique (101) ; et
effectuer au moins un parmi les suivants : activer une fonction muette, ajuster la taille et la position de l'avatar inclus dans la première vidéo d'avatar, changer des accessoires de l'avatar inclus dans la première vidéo d'avatar, ou ajuster la taille et la position de la source d'arrière-plan sur la base du changement de contexte d'utilisation.
